(19) Europäisches Patentamt
European Patent Office
Office européen des brevets

(11) Veröffentlichungsnummer: **0 176 474**
**A1**

(12)

# EUROPÄISCHE PATENTANMELDUNG

(21) Anmeldenummer: 85810376.5

(22) Anmeldetag: 16.08.85

(51) Int. Cl.[4]: C 09 B 56/16
D 06 P 1/08, D 21 H 3/80

(30) Priorität: 22.08.84 CH 4018/84

(43) Veröffentlichungstag der Anmeldung:
02.04.86 Patentblatt 86/14

(84) Benannte Vertragsstaaten:
CH DE FR GB IT LI SE

(71) Anmelder: CIBA-GEIGY AG
Klybeckstrasse 141
CH-4002 Basel(CH)

(72) Erfinder: Möckli, Peter, Dr.
Sandgrubenstrasse 13
CH-4124 Schönenbuch(CH)

(54) **Methinazoverbindungen.**

(57) Methinazoverbindungen der Formel

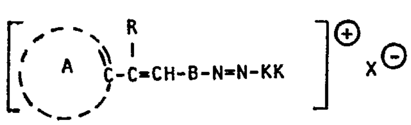

worin

A die Ergänzung zu einem heterocyclischen 5- oder 6-gliedrigen Ring mit einem quaternierten N-Atom als Ringglied, der weitere Heteroatome enthalten kann und der gegebenenfalls substituiert und/oder mit carbo- oder heterocyclischen Ringen kondensiert sein kann,

R Wasserstoff, Cyano oder $C_2$-$C_3$-Alkylen, das mit einem N-Atom des Ringes A zu einem 5- oder 6-gliedrigen Ring verbunden ist,

B gegebenenfalls substituiertes Phenylen oder Naphthylen,

$X^{\ominus}$ ein Anion und

KK den Rest einer Kupplungskomponente der Benzolreihe, der Naphthalinreihe oder der Heterocyclischen Reihe bedeuten,

mit den Massgaben, dass

a) für den Fall, dass A die Ergänzung zu einem quaternierten, gegebenenfalls substituierten Pyridin-, Chinolin- oder Indoleninrest ist, KK nicht für den Rest einer gegebenenfalls substituierten Phenol-, sulfogruppenfreien Naphthol-, Naphthylamin, Anilin-, Chinolin-, Isochinolin-, Pyrazol- oder Indol-Kupplungskomponente steht und

b) für den Fall, dass A die Ergänzung zu einem quaternierten, gegebenenfalls substituierten Benzthiazol- oder Perimidinrest ist, KK nicht für eine gegebenenfalls substituierte Phenol- oder Anilin-Kupplungskomponente steht. Diese Verbindungen können als Farbstoffe zum Färben oder Bedrucken von beispielsweise Polyacrylnitril, sauer modifiziertem Polyester und insbesondere von Papier verwendet werden.

EP 0 176 474 A1

Croydon Printing Company Ltd

CIBA-GEIGY AG
Basel (Schweiz)

1-15047/-/C

Methinazoverbindungen

Die Erfindung betrifft neue Methinazoverbindungen, Verfahren zu deren Herstellung und deren Verwendung als Farbstoffe zum Färben und Bedrucken von kationisch färbbaren Substraten, vor allem von Papier.

Die erfindungsgemässen neuen Verbindungen entsprechen der Formel

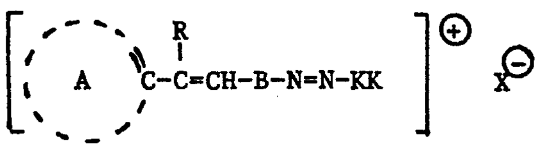

(I),

worin

A die Ergänzung zu einem heterocyclischen 5- oder 6-gliedrigen Ring mit einem quaternierten N-Atom als Ringglied, der weitere Heteroatome enthalten kann und der gegebenenfalls substituiert und/oder mit carbo- oder heterocyclischen Ringen kondensiert sein kann,

R Wasserstoff, Cyano oder $C_2$-$C_3$-Alkylen, das mit einem N-Atom des Ringes A zu einem 5- oder 6-gliedrigen Ring verbunden ist,

B gegebenenfalls substituiertes Phenylen oder Naphthylen,

$X^{\ominus}$ ein Anion und

KK den Rest einer Kupplungskomponente der Benzolreihe, der Naphthalinreihe oder der heterocyclischen Reihe bedeuten,

mit den Massgaben, dass

a) für den Fall, dass A die Ergänzung zu einem quaternierten, gegebenenfalls substituierten Pyridin-, Chinolin- oder Indoleninrest ist, KK nicht für den Rest einer gegebenenfalls substituierten Phenol-, sulfogruppenfreien Naphthol-, Naphthylamin-, Anilin-, Chinolin-, Isochinolin-, Pyrazol- oder Indol-Kupplungskomponente steht und

b) für den Fall, dass A die Ergänzung zu einem quaternierten, gegebenenfalls substituierten Benzthiazol- oder Pyrimidinrest ist, KK nicht für eine gegebenenfalls substituierte Phenol- oder Anilin-Kupplungskomponente steht.

A bedeutet zusammen mit der Konfiguration $\geqslant$C- einen heterocyclischen 5- oder 6-gliedrigen Ring, der ein quaterniertes N-Atom als Ringglied enthält. Dieser Ring kann auch noch weitere Heteroatome (N, O, S) enthalten, beispielsweise eines oder zwei, insbesondere eines. An diesen Ring können ein oder mehrere heterocyclische oder vorzugsweise carbocyclische Ringe ankondensiert sein, insbesondere ein Benzo- oder Naphthoring. Die genannten Ringe bzw. Ringsysteme können auch, abgesehen vom Substituenten des N-Atoms, der zur Quaternierung desselben führt, auch noch weitere Substituenten tragen. Beispiele für derartige Substituenten sind Nitro, Halogen, Cyano, $C_1$-$C_4$-Alkyl, $C_1$-$C_4$-Alkoxy, Acetylamino und Dimethylamino. Der Substituent am quaternierten Stickstoffatom kann beispielsweise, Phenyl, $C_1$-$C_8$-Alkyl, $C_2$-$C_8$-Alkenyl oder $C_3$-$C_6$-Cycloalkyl bedeuten, wobei die Alkyl-, Alkenyl- oder Cycloalkylkette durch Sauerstoff- oder Stickstoffatome unterbrochen und/oder durch Halogen, Cyano, Hydroxy, Alkoxy, Phenyl, Phenoxy, Dialkylamino, Trialkylammonium, Acetylamino, Alkylcarbonyl, Alkoxycarbonyl, Alkyl-, Phenyl- oder Benzylsulfonyl, Alkyl-, Phenyl- oder Benzylsulfonamido, Alkylcarbonylamino, Benzoyl, Benzoylamino, Alkyl-, Phenyl- oder Benzylcarbamoyl, Alkyl-, Phenyl- oder Benzylcarbamoyloxy substituiert sein kann.

Beispielsweise bedeutet A die Ergänzung zu einem gegebenenfalls mit carbocyclischen Ringen, vorzugsweise mit einem Benzo- oder Naphthoring, kondensierten Pyrimidin-, Pyridin-, Chinolin-, Thiazol-, Imidazol-, Oxazol- oder Pyrrolring, welche Ringe am N-Atom quaterniert sind und gegebenenfalls weiter substituiert sind. Beispiele für Substituenten am quaternierten N-Atom und für zusätzliche Substituenten sind im vorstehenden Absatz angeführt.

Insbesondere bedeutet A die Ergänzung zu einem gegebenenfalls substituierten oder/und mit carbocyclischen Ringen kondensierten Pyridinring.

In praktisch wichtigen Verbindungen der Formel (I) bedeutet A die Ergänzung zu einem der folgenden Ringe:

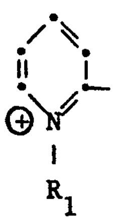 , 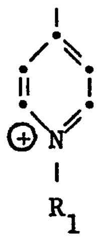 , 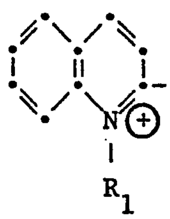 , 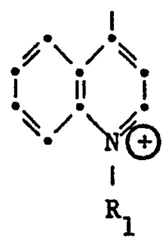 , 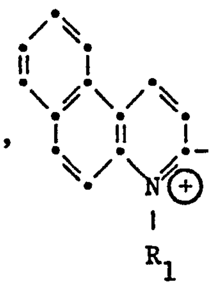

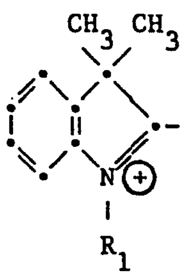 , 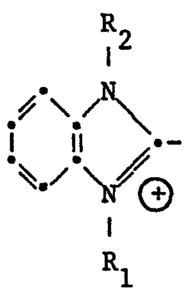 , 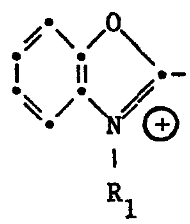 , 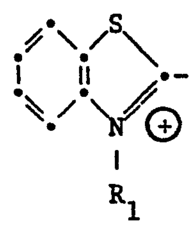

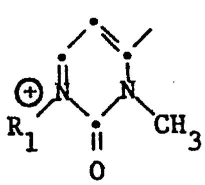 , 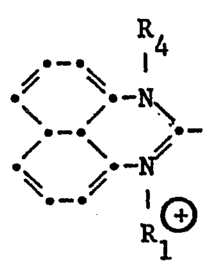 , 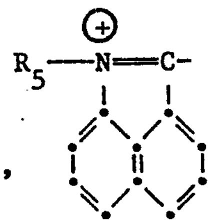 oder 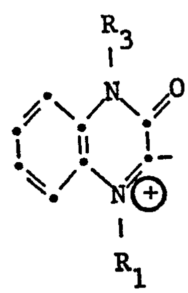 ,

wobei diese Ringe neben den Substituenten $R_1$-$R_5$ noch durch Nitro, Halogen, Cyano, $C_1$-$C_4$-Alkyl, $C_1$-$C_4$-Alkoxy, Acetylamino oder Dimethylamino substituiert sein können und worin $R_1$, $R_2$, $R_3$ und $R_4$ unabhängig voneinander $C_1$-$C_8$-Alkyl, $C_2$-$C_8$-Alkenyl oder $C_3$-$C_6$-Cycloalkyl bedeuten, wobei die Alkyl-, Alkenyl- oder Cycloalkylkette durch Sauerstoff- oder Stickstoffatome unterbrochen und/oder durch Halogen, Cyano,

Hydroxy, Alkoxy, Phenyl, Phenoxy, Dialkylamino, Trialkylammonium, Acetylamino, Alkylcarbonyl, Alkoxycarbonyl, Alkyl-, Phenyl- oder Benzylsulfonyl, Alkyl-, Phenyl- oder Benzylsulfonamido, Alkylcarbonylamino, Benzoyl, Benzoylamino, Alkyl-, Phenyl- oder Benzylcarbamoyl, Alkyl-, Phenyl- oder Benzylcarbamoyloxy substituiert sein kann und $R_5$ für Phenyl steht oder die Bedeutung von $R_1$ hat.

Vor allem bedeutet A die Ergänzung zu einem der folgenden Ringe:

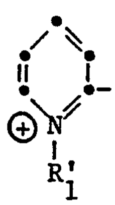
,
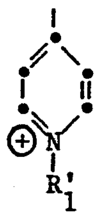
,
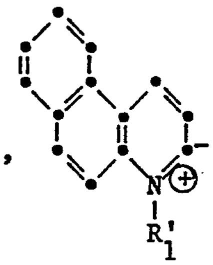
,
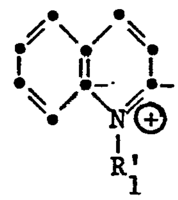
,
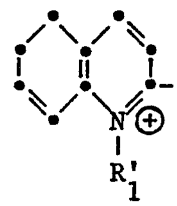

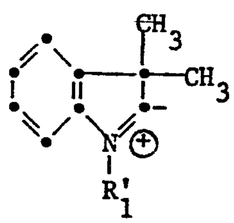
,
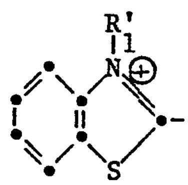
oder
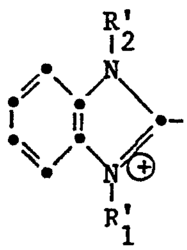

worin $R_1'$ und $R_2'$ unabhängig voneinander für $C_1$-$C_4$-Alkyl, Benzyl, Cyclohexyl, Hydroxyalkyl oder $C_3$-$C_4$-Alkenyl stehen und die genannten Ringe ansonsten unsubstituiert oder durch Halogen, Cyano, $C_1$-$C_4$-Alkyl, $C_1$-$C_4$-Hydroxyalkyl oder $C_1$-$C_4$-Alkoxy substituiert sind.

Besonders bevorzugt bedeutet A die Ergänzung zu einem quaternierten, gegebenenfalls substituierten und/oder mit carbocyclischen Ringen kondensierten Pyridinring, wobei bevorzugte ankondensierte Ringe und Substituenten vorstehend angegeben sind. Insbesondere ist A die Ergänzung zu einem Pyridinring, dessen N-Atom mit $C_1$-$C_4$-Alkyl, vor allem Methyl, quaterniert ist und der gegebenenfalls zusätzlich mit ein oder zwei $C_1$-$C_4$-Alkylgruppen substituiert ist, wobei die Verknüpfung zur

$-\overset{R}{\overset{|}{C}}=CH$-Gruppe in 2- oder 4-Stellung erfolgt.

Hervorzuheben sind auch jene Verbindungen der Formel (I), worin A die Ergänzung zu einem Pyridinium- oder 3,3-Dimethylindoleniniumring der obigen Formeln bedeuten, worin $R_1'$ für Methyl steht.

Bedeutet R eine $C_2$-$C_3$-Alkylengruppe, die mit einem N-Atom des Ringes A zu einem 5- oder 6-gliedrigen Ring verbunden ist, so handelt es sich beispielsweise um folgende Strukturen:

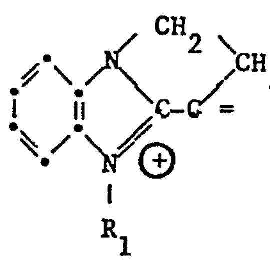 bzw. 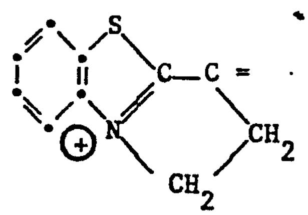

und ähnliche. Bevorzugt bedeutet R jedoch Wasserstoff.

Als Substituenten im Phenylen- bzw. Naphthylenring B kommen beispielsweise in Frage: $C_1$-$C_4$-Alkyl (z.B. Methyl, Aethyl, n- und iso-Propyl), $C_1$-$C_4$-Alkoxy (z.B. Methoxy, Aethoxy, n-Butoxy, Dimethylaminoäthoxy, Trimethylaminoäthoxy), Halogen (z.B. Fluor, Chlor, Brom), $SO_3H$ und Acylamino (z.B. Acetylamino). In bevorzugten Verbindungen steht B für den Phenylenring, der gegebenenfalls 1 oder 2 Substituenten aus der Gruppe $C_1$-$C_4$-Alkyl, $C_1$-$C_4$-Alkoxy und Halogen tragen kann.

Bedeutet B in Verbindungen der Formel (I) (gegebenenfalls substituiertes) Phenylen, so ist dieses vorzugsweise 1,4-Phenylen, vor allem unsubstituiertes 1,4-Phenylen.

Unter den Verbindungen der Formel (I) sind jene hervorzuheben, worin A, R, B und $X^{\ominus}$ wie unter Formel (I) definiert sind und KK den Rest einer Kupplungskomponente der Benzolreihe, der Naphthalinreihe oder der heterocyclischen Reihe mit Ausnahme einer gegebenenfalls substituierten Phenol-, Naphthylamin-, sulfongruppenfreien Naphthol-,

Anilin-, Chinolin-, Isochinolin-, Pyrazol- oder Indol-Kupplungskomponente, bedeutet.

KK bedeutet den Rest einer in der Azochemie, insbesondere in der Chemie der Azofarbstoffe, üblichen Kupplungskomponente der Benzolreihe, der Naphthalinreihe oder der heterocyclischen Reihe. Dabei sind jedoch die unter Formel (I) angegebenen Massgaben a) und b) zu beachten. Aus der grossen Vielzahl der möglichen Kupplungskomponenten seien im folgenden einige beispielhaft aufgeführt:

1) <u>Benzolreihe</u>

a) Phenole gemäss der Formel

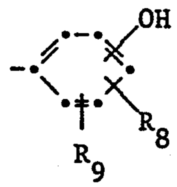

worin bedeuten: $R_8$ und $R_9$ unabhängig voneinander Wasserstoff, $C_1$-$C_4$-Alkyl, OH, $C_1$-$C_4$-Alkoxy, $SO_3H$, COOH, Alkoxycarbonyl, Acyl, Acylamino, Alkenyl, Cyclopentyl, Cyclohexyl, Aryl, Benzyl, Phenäthyl, Halogen. Als derartige Phenole kommen beispielsweise in Frage:

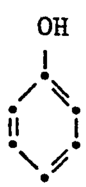 , 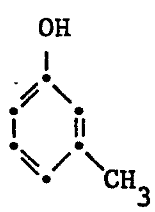 , 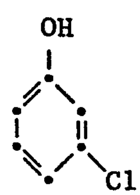 , 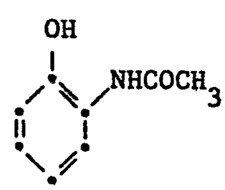 ,

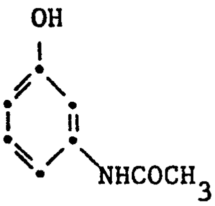 , 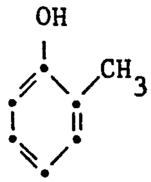 , 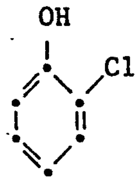 , 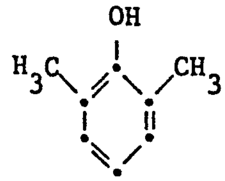

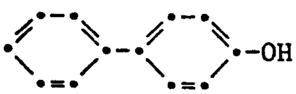 , 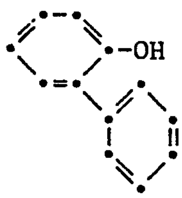 , 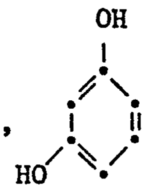 ,

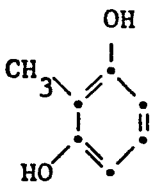 , 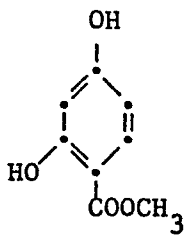 , 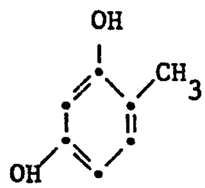 , 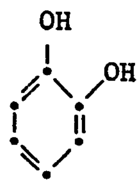 ,

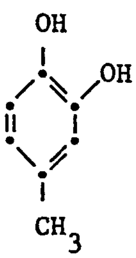 , 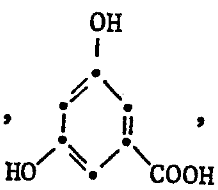 , 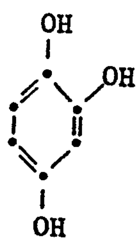 , 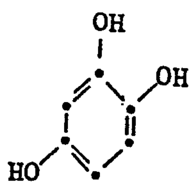 , 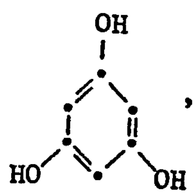 ,

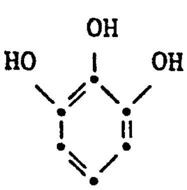 , 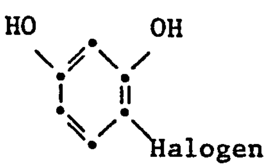

b) Benzole der Formel

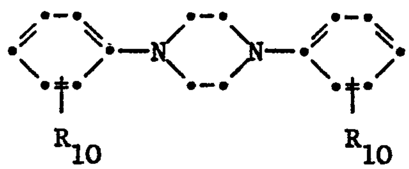

worin $R_{10}$ Wasserstoff, $C_1$-$C_4$-Alkyl und OH bedeutet;

c) Benzole der Formel

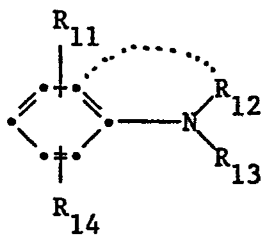

worin bedeuten:

$R_{11}$ H, $C_1$-$C_4$-Alkyl, OH, $C_1$-$C_4$-Alkoxy, Halogen, $SO_3H$, Acylamino,

$R_{12}$ und $R_{13}$ unabhängig voneinander: H, $C_1$-$C_8$-Alkyl, Alkenyl, Cylcloalkyl, Aryl, Benzyl, Phenäthyl, $C_1$-$C_4$-Alkoxy, Hydroxyäthyl, Cyanäthyl, Halogenäthyl, $-CH_2CH_2-O-\underset{\overset{\|}{O}}{C}-C_1-C_4$-Alkyl,

$-CH_2CH_2-O-\underset{\overset{\|}{O}}{C}-O-C_1-C_4$-Alkyl,

$$\overset{\oplus}{} \quad -CH_2CH_2-\underset{\text{Alkyl-}C_1-C_4}{\overset{\text{Alkyl-}C_1-C_4}{N}}\text{-Alkyl-}C_1-C_4$$ ,

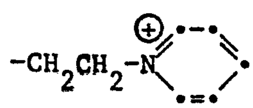

wobei $R_{12}$ mit dem Benzolkern auch einen 5- oder 6-gliedrigen, gesättigten Ring bilden kann, gegebenenfalls unter Einschluss weiterer Heteroatome,

$R_{12}$ und $R_{13}$ können auch einen 5- oder 6-gliedrigen Ring miteinander bilden, gegebenenfalls unter Einschluss weiterer Heteroatome, beispielsweise einen Piperidin-, Piperazin- oder Morpholinring.

$R_{14}$ H, $C_1$-$C_4$-Alkyl, Halogen, $CF_3$, OH, $C_1$-$C_4$-Alkoxy und Amino; beispielsweise:

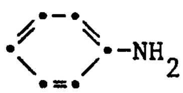 , 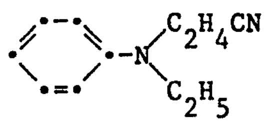 , 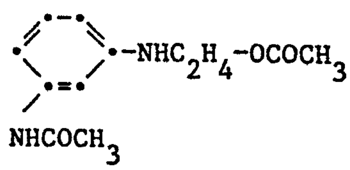 ,

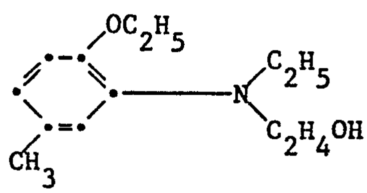 , 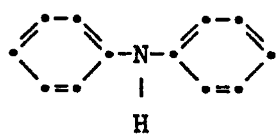 , 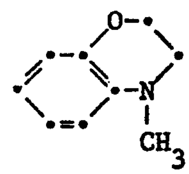

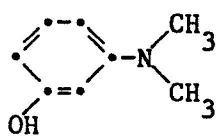 , 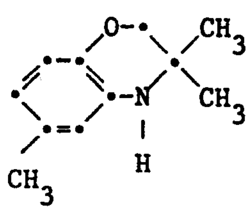 , 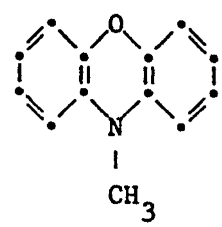

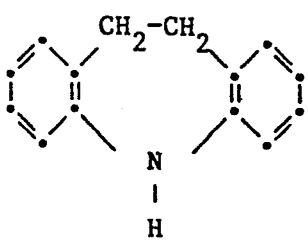 , 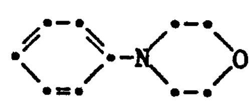 .

2) <u>Naphthalinreihe</u>

a) α-Naphthole der Formel

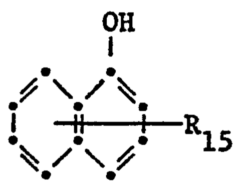

worin $R_{15}$ Wasserstoff, OH oder $SO_3H$ bedeutet, beispielsweise:

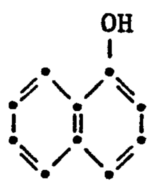 , 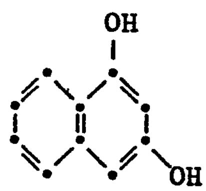 , 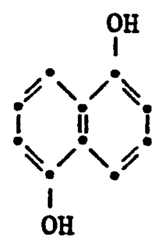 ,

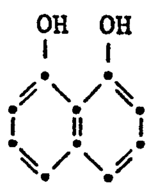 und 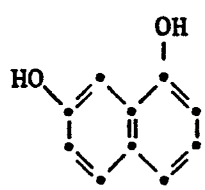 .

b) β-Naphthole der Formel

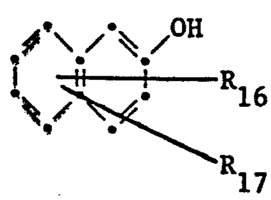

worin bedeuten:

$R_{16}$ Wasserstoff, OH, $SO_3H$ und $SO_2NH_2$,

$R_{17}$ Wasserstoff, -CONH— 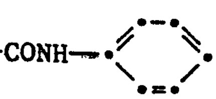 ,

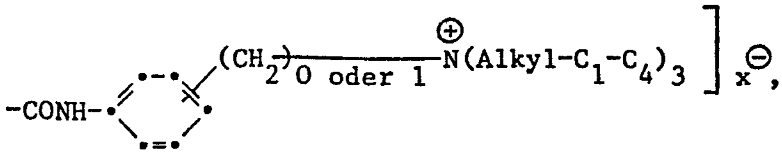

$-CONH-(CH_2)_p-N-(Alkyl-C_1-C_4)_2$, $-(CH_2)_p-\overset{\oplus}{N}(Alkyl-C_1-C_4)_3 \;|\; X^{\ominus}$

und

p 2 und 3, $X^{\ominus}$ ein Anion;

beispielsweise:

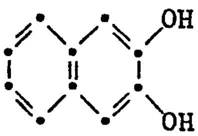 , 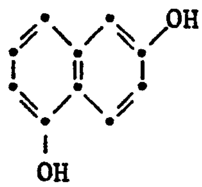 , 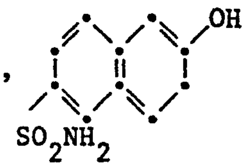 ,

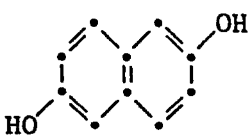 , 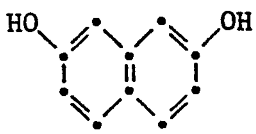 , 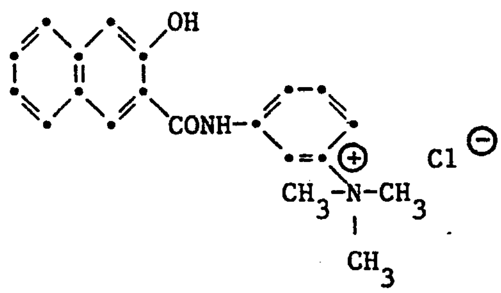

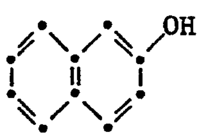 und 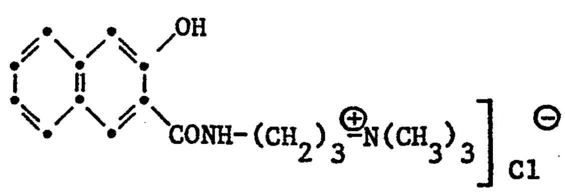

c) Naphthole der Formel

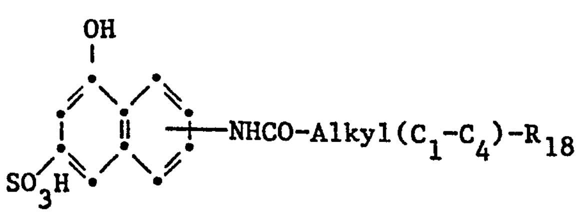

worin

$R_{18}$ eine basische Aminogruppe oder eine kationische Ammoniumgruppe bedeutet;

beispielsweise

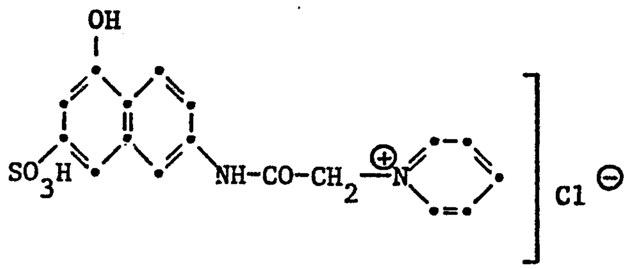

.

d) Naphthole gemäss der DE-A- 3 114 087 die der Formel

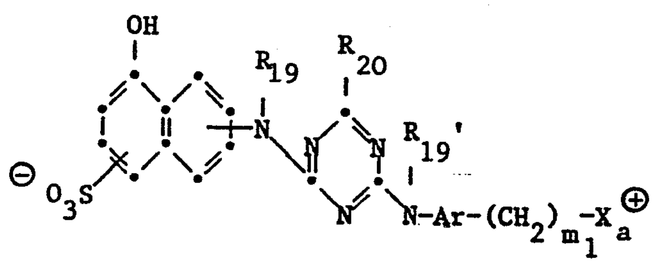

entsprechen, worin

$R_{19}$ Wasserstoff oder $C_1$-$C_4$-Alkyl,

Ar Arylen, insbesondere Phenylen,

$R_{20}$ Halogen, Hydroxy, $C_1$-$C_4$-Alkoxy, eine gegebenenfalls mono- oder disubstituierte Aminogruppe,

$m_1$ 0 oder 1 und

$X_a^{(+)}$ eine Ammoniumgruppe bedeuten, und worin die cyclischen und acylischen Reste weitere nichtionische Substituenten tragen können;

beispielsweise:

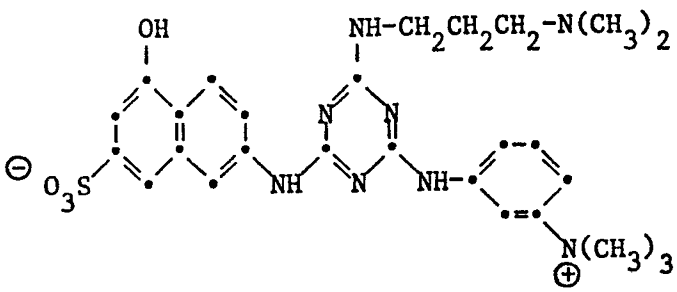

e) Naphthole gemäss EP -A-0 065 595 der Formel

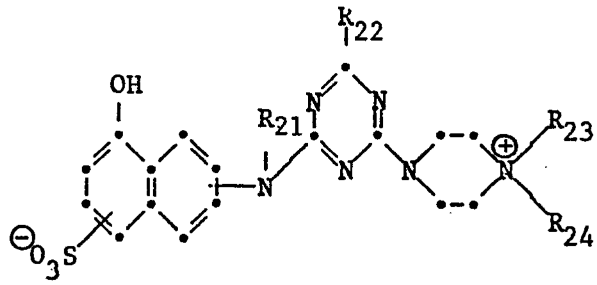

worin

$R_{21}$ Wasserstoff oder Alkyl,

$R_{22}$ Halogen, Hydroxy, Alkoxy oder eine gegebenenfalls mono- oder di-substituierte Aminogruppe, deren Substituenten - gegebenenfalls über ein Heteroatom - ringgeschlossen sein können, zu einem 5- oder 6-gliedrigen N-Heterocyclus, beispielsweise zu einem Piperidin-, Piperazin- oder Morpholinring,

$R_{23}$ und $R_{24}$ unabhängig voneinander Wasserstoff, Alkyl, Alkenyl oder Aralkyl, bedeuten,

und worin die cyclischen und acyclischen Reste weitere Substituenten tragen können,

beispielsweise:

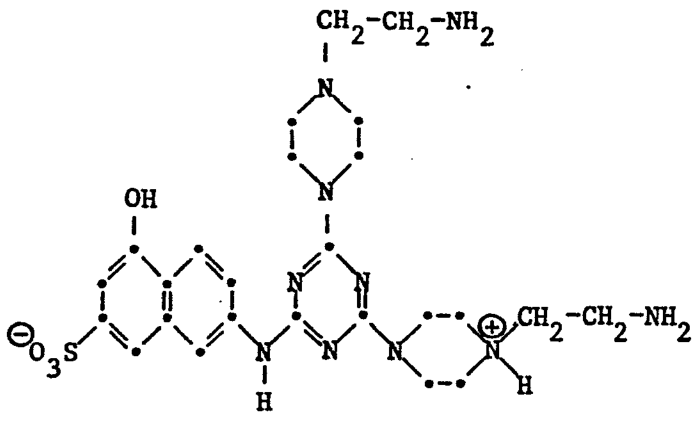

f) Naphthole gemäss der DE- A- 3 224 786 der Formel

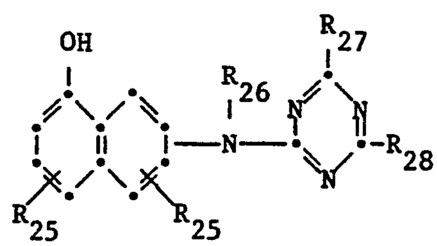

worin bedeuten:

$R_{25}$ $-SO_3H$ oder ein Salz davon,

$R_{26}$ Wasserstoff oder $C_1$-$C_4$-Alkyl,

$R_{27}$ Halogen, OH, Alkoxy oder eine gegebenenfalls mono- oder di-substituierte Aminogruppe inklusive eines 5- oder 6-gliedrigen cyclischen Amins,

$R_{28}$ ein substituiertes Piperazin der Formel

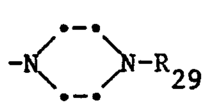

oder

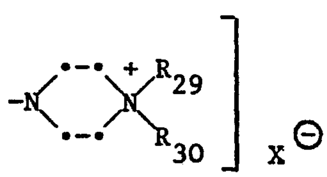

worin $R_{29}$ und $R_{30}$ H, Alkyl, Alkenyl, Aminoalkyl oder Aralkyl und X ein Anion bedeutet;

beispielsweise:

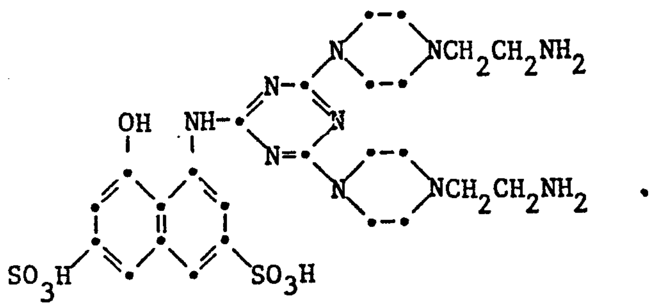

g) Naphthole der Formel

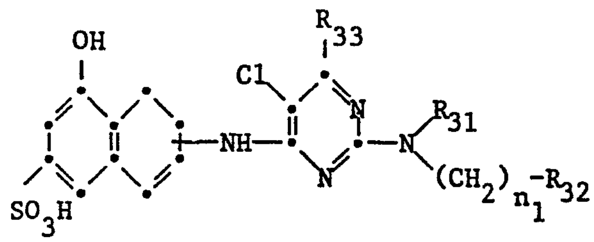

worin bedeuten:

$R_{31}$ Wasserstoff und $C_1$-$C_4$-Alkyl,

$R_{32}$ eine basische Aminogruppe oder eine kationische Ammoniumgruppe, oder

$R_{31}$ ist mit $R_{32}$ unter Einbezug des N-Atoms zu einem heteroaliphatischen Ring verbunden, beispielsweise einem solchen der Formel

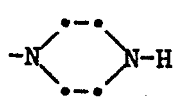 oder 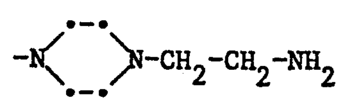

$R_{33}$ Halogen, OH, Alkoxy oder eine gegebenenfalls mono- oder disubstituierte Aminogruppe und

$n_1$ bedeutet die Zahlen 2, 3 und 4.

h) Naphthole gemäss der DE-A- 3 133 568 der Formel

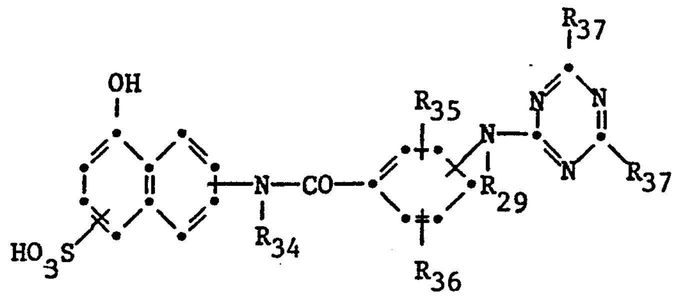

worin $R_{34}$ Wasserstoff oder Alkyl,

$R_{35}$ und $R_{36}$ unabhängig voneinander Wasserstoff, Alkyl, Alkoxy oder Halogen, und

$R_{37}$ Hydroxy, Alkoxy oder eine gegebenenfalls mono- oder disubstituierte Aminogruppe oder eine cyclische, gegebenenfalls substituierte Aminogruppe bedeuten,

beispielsweise:

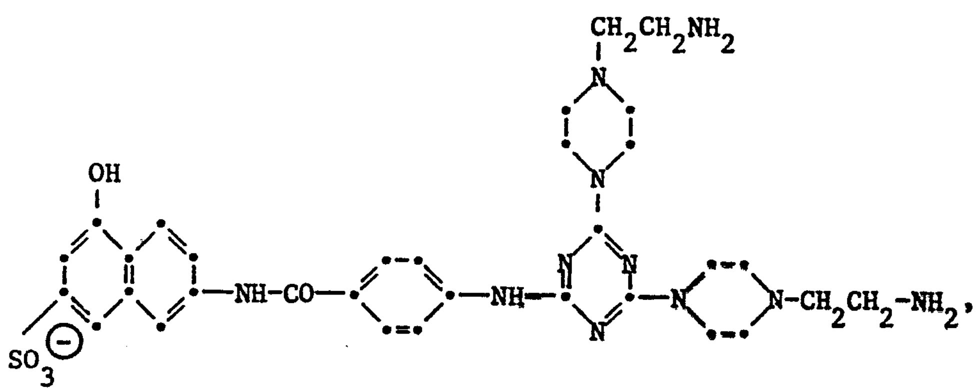

i) Bis-Naphthole der Formel

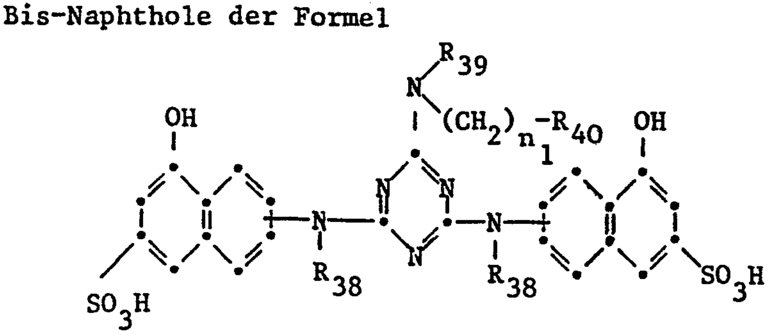

worin bedeuten:

$R_{38}$ Wasserstoff oder $C_1$-$C_4$-Alkyl,

$R_{39}$ Wasserstoff oder $C_1$-$C_4$-Alkyl,

$R_{40}$ eine basische Aminogruppe oder eine kationische Ammoniumgruppe, oder

$R_{39}$ bildet mit $R_{40}$ einen heteroaliphatischen Ring der seinerseits substituiert sein kann, z.B. einen Ring der Formel

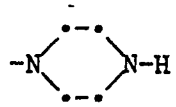

oder

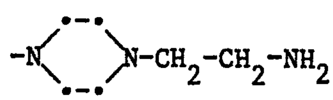

und

$n_1$ die Zahlen 2, 3 und 4;

beispielsweise:

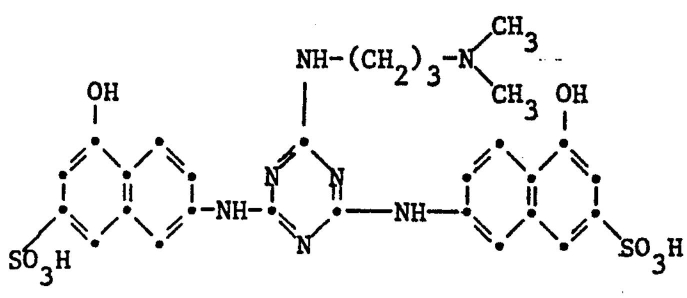

k) α-Naphthylamine der Formel

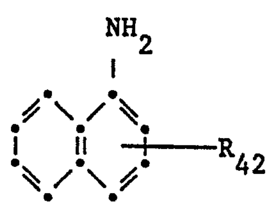

worin $R_{42}$ Wasserstoff, OH oder $SO_3H$ bedeutet,

beispielsweise:

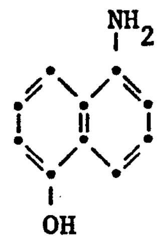 , 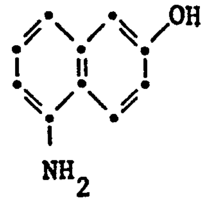

l) β-Naphthylamine der Formel

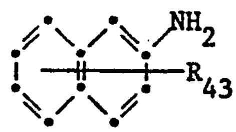

worin $R_{43}$ Wasserstoff, OH, $NH_2$ oder $SO_3H$ bedeutet,

beispielsweise:

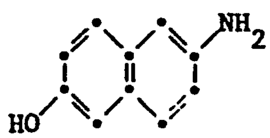 , 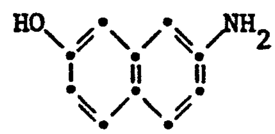 , und 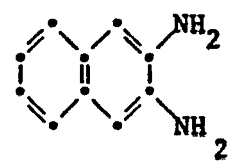 .

m) α-Naphthole gemäss DE-A-2 915 323 der Formel

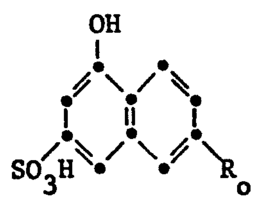

worin $R_o$ Wasserstoff, $NH_2$, $(C_1-C_4)$Alkyl-carbonylamino, Benzoylamino, dessen Phenylrest durch 1 oder 2 Substituenten aus der Reihe Halogen, $NO_2$, $NH_2$, $C_1-C_4$-Alkyl und $C_1-C_4$-Alkoxy substituiert sein kann; oder

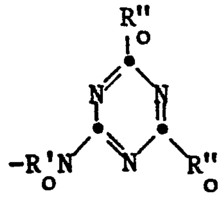 bedeutet,

0176474



worin $R_o'$ Wasserstoff oder $C_1$-$C_4$-Alkyl und $R_o''$ OH, $NH_2$ oder einen aliphatischen, cycloaliphatischen oder aromatischen Aminrest bedeuten, wobei dieser Aminrest beispielsweise der Formel $-NR_a-Q-NR_bR_c$ entspricht, worin $R_a$ H oder $CH_3$, Q $C_1$-$C_6$-Alkylen, $R_b$ und $R_c$ H, $C_1$-$C_4$-Alkyl, 2-Hydroxyäthyl, oder zusammen mit dem N-Atom einen Piperidin-, Piperazin- oder Morpholinring bedeuten, wobei die Gruppe $-NR_bR_c$ auch quaterniert sein kann;

beispielsweise

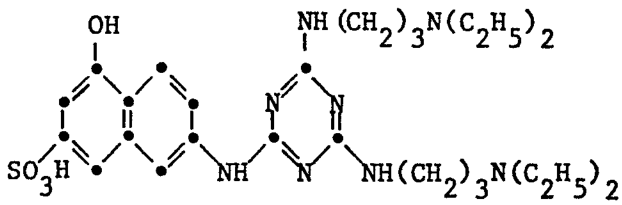 .

3) Kupplungskomponenten der heterocyclischen Reihe

a) Pyridine gemäss der DE-A-3 201 268 und 3 206 092, beispielsweise solche der Formel

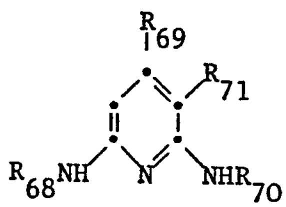

worin bedeuten: $R_{71}$: CN, $C_1$-$C_4$-Alkyl, $NO_2$, Halogen; $R_{68}$ und $R_{70}$: H, $C_1$-$C_4$-Alkyl, Alkenyl, Cyclohexyl, Aryl, Benzyl, Phenäthyl oder einer der Reste von $R_{68}$ und $R_{70}$: gegebenenfalls durch Cl, $CH_3$, $C_2H_5$, tert.-Butyl, Phenoxy, Methoxy, Aethoxy, Propoxy oder Butoxy ein- oder mehrfach substituiertes Phenyl und der andere der Reste $R_{68}$ und $R_{70}$ gegebenenfalls durch $C_1$-$C_4$-Alkoxy oder Phenyl substituiertes $C_2$-$C_8$-Alkyl, Allyl, Cyclopentyl, Cyclohexyl, Methylcyclohexyl,

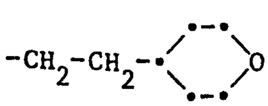 oder 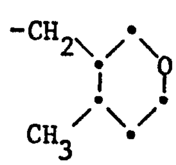, und $R_{69}$ Wasserstoff, $CH_3$, $C_2H_5$

oder $C_3H_7$; beispielsweise

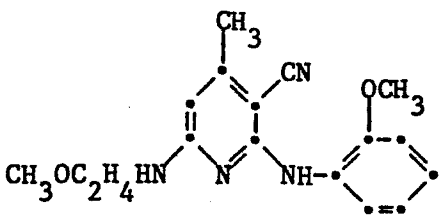

,

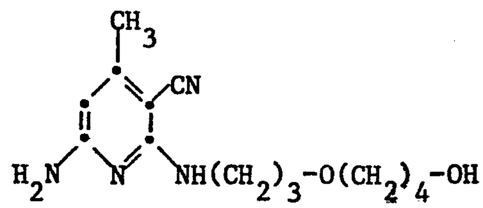

.

b) Pyridine gemäss der DE-A- 24 36 897 und 32 96 092, beispielsweise solche der Formel:

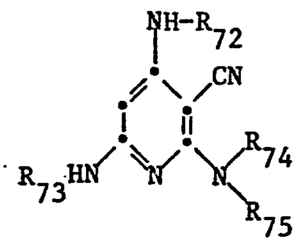

bzw.

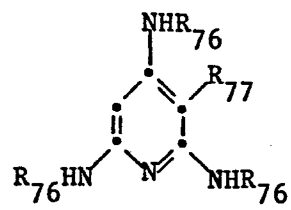

worin bedeuten:

$R_{72}$ und $R_{73}$ eine gegebenenfalls durch $C_1$-$C_8$-Alkoxy substituierte $C_1$-$C_8$-Alkylgruppe,

$R_{74}$ und $R_{75}$ ein Wasserstoffatom, eine $C_1$-$C_8$-Alkylgruppe, die durch Hydroxy, Amino, $C_1$-$C_8$-Alkoxy oder $NT_1T_2$ substituiert sein kann, eine gegebenenfalls durch Methylreste substituierte Cycloalkylgruppe, eine gegebenenfalls durch 1 bis 3 Chlor, $C_1$-$C_4$-Alkyl oder $C_1$-$C_4$-Alkoxy substituierte Benzylgruppe oder zusammen die Reste $-(CH_2)_4-$, $-(CH_2)_3-$, $-(CH_2)_4-$, $-(CH_2)_3-O-(CH_2)_3-$, $-(CH_2)_3-NCH_3-(CH_2)_3-$, $-(CH_2)_3-S-(CH_2)_3-$ oder $-NH-(CH_2)_3-$ und $T_1$ und $T_2$ eine $C_1$-$C_8$-Alkylgruppe,

$R_{76}$ H, $C_1$-$C_4$-Alkyl, Alkenyl, Cyclohexyl, Aryl, Benzyl,

$R_{77}$ CN, COOH, COOAlkyl, COOCyclohexyl, COOAryl, COOBenzyl, Alkyl($C_1$-$C_4$), $NO_2$, Halogen, $SO_2$-Alkyl($C_1$-$C_4$);

beispielsweise:

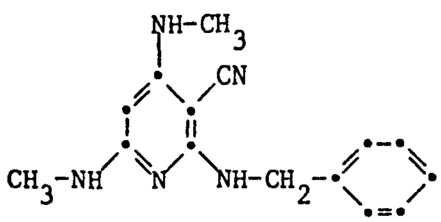
,
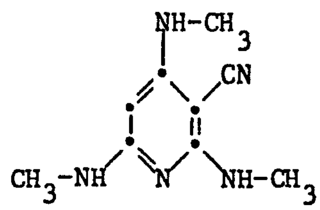
,

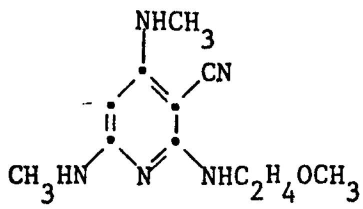
.

c) Pyridone der Formel

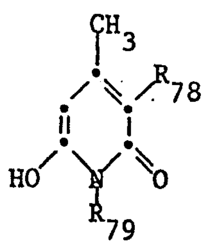

worin bedeuten:

$R_{79}$ gegebenenfalls substituiertes $C_1$-$C_8$-Alkyl, oder Wasserstoff und

$R_{78}$ CN, $CONH_2$ und $SO_2NH_2$;

beispielsweise:

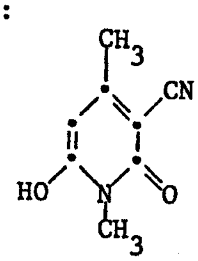
,
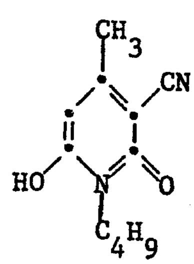
;

d) Pyridone gemäss der CH-A-628 078 der Formel:

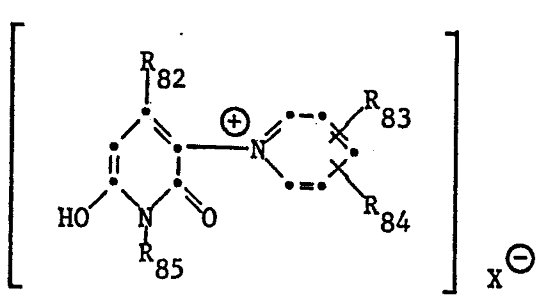

worin bedeuten:

$R_{82}$, $R_{83}$ und $R_{84}$ unabhängig voneinander: H, $C_1$-$C_4$-Alkyl,

$R_{85}$: H, $C_1$-$C_{20}$-Alkyl, und

X⁻ : ein Anion;

beispielsweise:

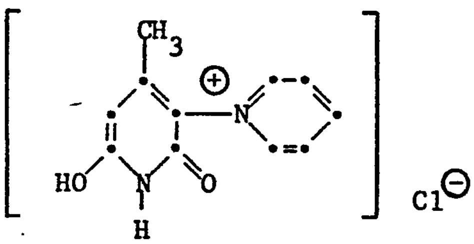

e) Pyridone gemäss der DE-A- 3 037 911 der Formel

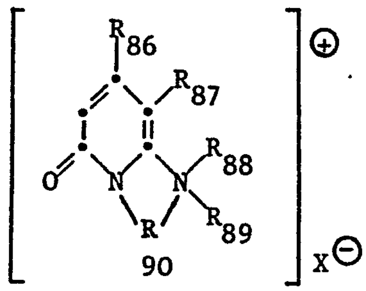

worin bedeuten:

$R_{86}$: H, $C_1$-$C_4$-Alkyl, Cycloalkyl, Aryl, Aralkyl, Heterocyclus, CN, OH, $COOR_{91}$, $CONR_{91}R_{92}$, $COR_{92}$ oder $CONH_2$,($R_{91}$ und $R_{92}$ = $C_1$-$C_4$-Alkyl, Cycloalkyl, Aryl, Aralkyl, Heterocyclus wobei $R_{92}$ auch H sein kann)

$R_{87}$: $R_{86}$, Halogen, $NO_2$

$R_{88}$ und $R_{89}$: $C_1$-$C_4$-Alkyl, Cycloalkyl, Aryl, Aralkyl, Alkenyl, wobei $R_{89}$ auch H sein kann,

$R_{90}$ ein Brückenglied, und

X : ein Anion;

beispielsweise:

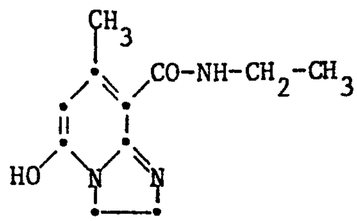

,

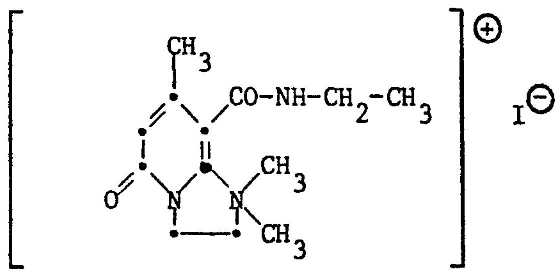

.

g) 8-Hydroxychinolin der Formel

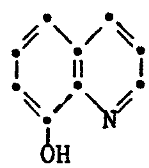

.

h) Indole der Formeln:

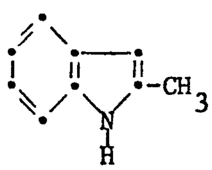 , 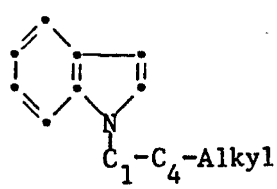 , 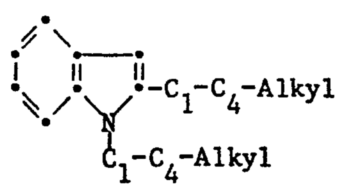 .

i) Pyrimidine der Formel:

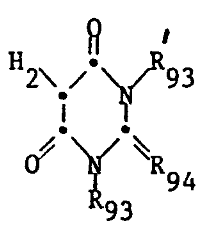

worin

$R_{93}$ und $R'_{93}$ Wasserstoff oder $C_1$-$C_4$-Alkyl und

$R_{94}$ O oder N-CN bedeuten;

beispielsweise:

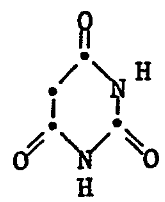

.

k) Pyrimidine gemäss EP-A-87 037 der Formel:

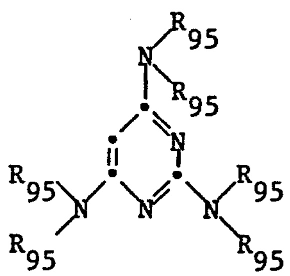

worin bedeuten:

jedes $R_{95}$ unabhängig voneinander: H, $C_1$-$C_4$-Alkyl, Alkenyl, Cyclopentyl, Cyclohexyl, Aryl, Benzyl und Phenäthyl;

beispielsweise

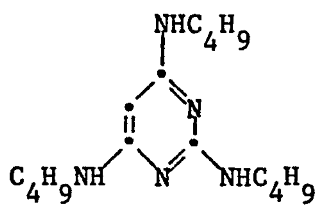

,

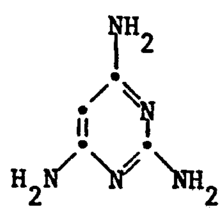

.

l) Pyrazole gemäss EP-A-87 037 der Formel

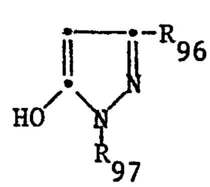

worin bedeuten:

$R_{97}$ H, $C_1$-$C_4$-Alkyl, Alkenyl, Cyclohexyl, Aryl, Benzyl und Phenyläthyl, und

$R_{96}$=$R_{97}$ oder $COOR_{97}$ oder $CONR_{97}$, beispielsweise

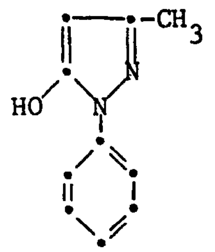

.

m) Pyrazole gemäss EP -A-87 037 der Formel

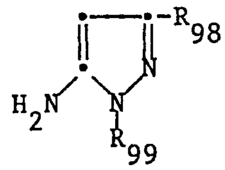

worin bedeuten:

$R_{99}$ H, $C_1$-$C_4$-Alkyl, Alkenyl, Cyclohexyl, Aryl, Benzyl und Phenäthyl und

$R_{98} = R_{99}$ oder $COOR_{99}$ oder $CONR_{99}$;

beispielsweise

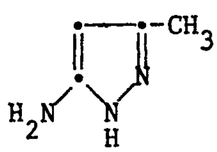

,

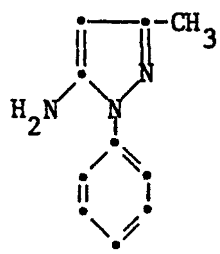

.

n) Pyrazole gemäss EP -A-0072508 und EP-A-0075773

der Formel:

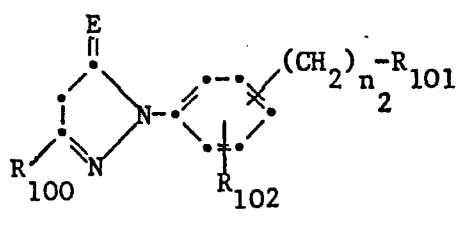

worin bedeuten:

$R_{100}$ $C_1$-$C_4$-Alkyl, oder $C_1$-$C_4$-Alkoxycarbonyl,

E = NH oder O,

$R_{102}$ Wasserstoff oder ein nichtionischer Substituent

$n_2$ 0, 1 oder 2, und

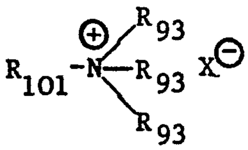 , 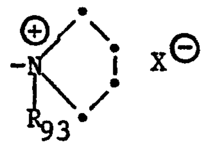 , 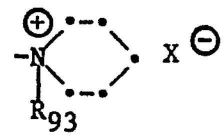 ,

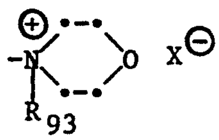 , 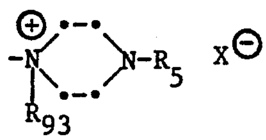 , 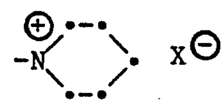 ,

worin $R_{93}$ Wasserstoff und $C_1$-$C_4$-Alkyl und
X ein Anion bedeutet,

beispielsweise:

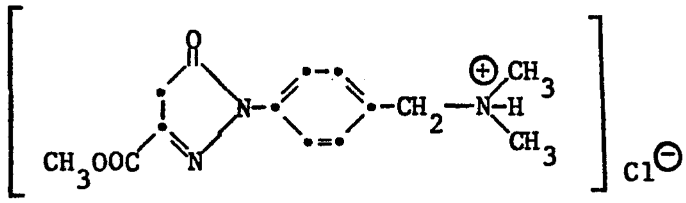 ,

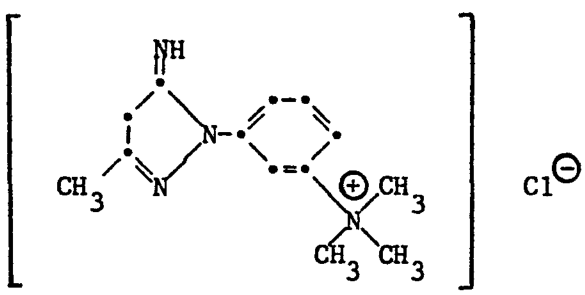 .

Soweit in obigen Definitionen sowie in der gesamten übrigen Beschreibung Alkylgruppen als solche oder in zusammengesetzten Gruppen als "gegebenenfalls substituiert" bezeichnet sind, kommen als Beispiele für solche Substituenten, sofern nichts anderes angegeben ist, folgende in Frage: Hydroxy, Cyano, Halogen (z.B. Cl, Br), $C_1$-$C_4$-Alkoxy, Phenyl (gegebenenfalls 1-3-fach substituiert durch Halogen, Methyl oder Methoxy), Amino, Alkylamino oder Dialkylamino. Sofern ebenfalls nichts anderes angegeben ist, weisen Alkylgruppen als solche oder in zusammengesetzten Gruppen vorzugsweise 1-8, insbesondere 1-4, C-Atome und Cycloalkylgruppen vorzugsweise 5 oder 6 C-Atome auf.

Beispiele für als nichtionische Substituenten bezeichnete Gruppen sind $C_1$-$C_4$-Alkyl, $C_1$-$C_4$-Alkoxy und Halogen. Unter Aryl wird vorzugsweise Naphthyl und insbesondere Phenyl verstanden.

KK kann also in erfindungsgemässen Verbindungen z.B. den Rest eines(r) gegebenenfalls substituierten Phenols, Dihydroxybenzols, Anilins, Diphenylamins, Naphthols, Naphtholsulfonsäure, Dihydroxynaphthalins, Naphthylamins, Hydroxynaphthylamins, 2,6-Diamino- oder Dihydroxypyridins, Pyridons, Chinolins, Benzimidazols, Benzochinolins, Pyrimidins, Pyrimidons, Indols oder Pyrazols bedeuten.

Beispiele für mögliche Substituenten können den vorstehenden Punkten 1) bis 3) (Aufzählung von möglichen Kupplungskomponenten) für die betreffenden Typen von Kupplungskomponenten entnommen werden.

Besonders zu erwähnen sind Verbindungen der Formel (I), worin KK den Rest eines(r) gegebenenfalls substituierten Pyrimidins, Pyrimidons, 8-Hydroxychinolins, Benzimidazols, Naphthols, Pyridons, Naphtholsulfonsäure, Anilins oder Dihydroxybenzols bedeutet. Beispiele für diese Kupplungskomponenten und deren mögliche Substituenten sind den vorstehenden Punkten 3)c), d), e), g), i), k); 1)a), c); 2)a), b), c), d), e), f), g), h), i), m) zu entnehmen

Bevorzugt sind jene erfindungsgemässen Verbindungen, in denen KK den Rest einer heterocyclischen Kupplungskomponente bedeutet, insbesondere solche, in denen KK den Rest einer Kupplungskomponente der Formeln

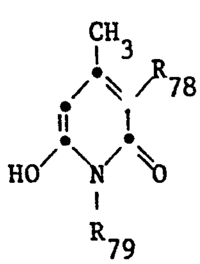 , 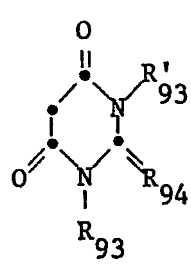 oder 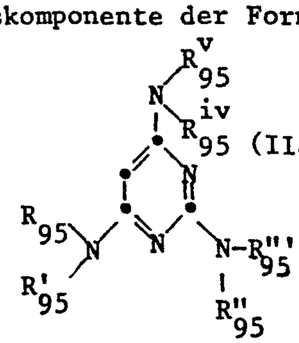 (IIa-c)

bedeutet, worin

$R_{78}$ CN, $CONH_2$, $SO_2NH_2$ oder $C_1$-$C_4$-Alkyl,

$R_{79}$ Wasserstoff oder gegebenenfalls substituiertes $C_1$-$C_8$-Alkyl,

$R_{93}$ und $R'_{93}$ unabhängig voneinander Wasserstoff oder $C_1$-$C_4$-Alkyl,

$R_{94}$ O oder N-CN und

$R_{95}$, $R'_{95}$, $R''_{95}$, $R'''_{95}$, $R^{iv}_{95}$ und $R^{v}_{95}$ jeweils unabhängig voneinander Wasserstoff, $C_1$-$C_4$-Alkyl, $C_2$-$C_4$-Alkenyl, Cyclopentyl, Cyclohexyl, Aryl, insbesondere Phenyl, Benzyl oder Phenäthyl bedeuten.

Beispiel für mögliche Substituenten von Alkylgruppen $R_{93}$ sind: Hydroxy, Cyano, Halogen (z.B. Cl, Br), $C_1$-$C_4$-Alkoxy, Phenyl (gegebenenfalls 1-3-fach substituiert durch Halogen, Methyl oder Methoxy), Amino, Alkylamino oder Dialkylamino.

Besonders zu erwähnen sind auch solche Verbindungen der Formel (I), worin KK den Rest einer Kupplungskomponente der Formel

(III) 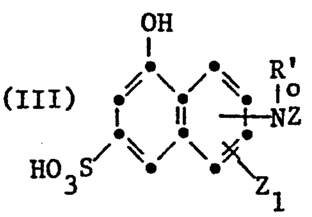 bedeutet,

worin $Z_1$ Wasserstoff oder Sulfo und Z $-CO-Alkyl(C_1-C_4)-R_{18}$ oder

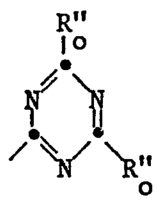 ,

$R'_o$ Wasserstoff oder $C_1$-$C_4$-Alkyl, $R_{18}$ eine basische Aminogruppe oder eine kationische Ammoniumgruppe, vorzugsweise Pyridinium, beide $R''_o$ unabhängig jeweils OH, $NH_2$ oder einen aliphatischen, cycloaliphatischen oder aromatischen Aminrest bedeuten. Dabei bedeutet $R''_o$ vorzugsweise einen Aminrest der Formel $-NR_a-Q-NR_bR_c$, worin $R_a$ Wasserstoff oder Methyl, Q $C_1$-$C_6$-Alkylen, $R_b$ und $R_c$ jeweils Wasserstoff, $C_1$-$C_4$-Alkyl, $C_1$-$C_4$-Hydroxyalkyl, $C_1$-$C_4$-Aminoalkyl oder zusammen mit dem N-Atom

einen Piperidin-, Piperazin- oder Morpholinring bedeuten, wobei die Gruppe $NR_bR_c$ auch quaterniert sein kann, oder Q und $R_a$ + $R_b$ jeweils $-CH_2-CH_2$ bedeuten, wodurch eine Gruppe 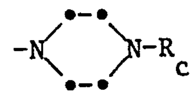 entsteht.

In Verbindungen der Formel (I), worin KK den Rest einer der vorstehend genannten Kupplungskomponenten der Formeln (II a-c) oder (III) bedeutet, steht A vorzugsweise für die Ergänzung zu einem Ring der Formeln

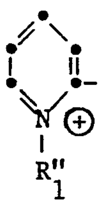 , 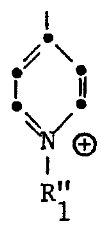 , 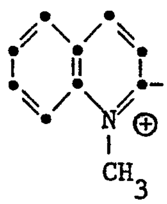 , 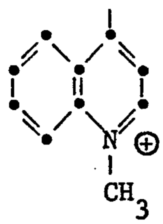 ,

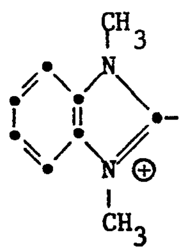 oder 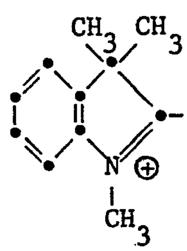 ,

worin $R_1''$ Methyl, Aethyl oder Benzyl bedeutet.

Als Anionen $X^{\ominus}$ in den Verbindungen der Formel (I) kommen für Farbstoffe übliche farblose organische und anorganische Anionen in Frage; beispielsweise seien genannt:Chlorid, Bromid, Jodid, Hydroxyl, Hydrogensulfat, Sulfat, Nitrat, Dihydrogenphosphat, Hydrogenphosphat,Phosphat, Carbonat, Methosulfat, Aethosulfat, Acetat, Propionat, Benzolsulfonat, Toluolsulfonat, Formiat, Lactat, Oxalat und Methoxyacetat; es können aber auch Gemische von verschiedenen Anionen vorliegen.

Die Ladung der erfindungsgemässen Methinazoverbindungen der Formel (I) ist definitionsgemäss kationisch. Da diese Verbindungen auch anionische Gruppen wie $SO_3H$- und COOH-Gruppen enthalten können, ist Bedingung, dass die Summe aller kationischen und basischen Gruppen mindestens um 1 grösser ist als die Summe aller anionischen Gruppen.

Die Herstellung der erfindungsgemässen Methinazoverbindungen der Formel (I) erfolgt nach bekannter Art und Weise, beispielsweise derart, dass man Methinverbindungen der Formel

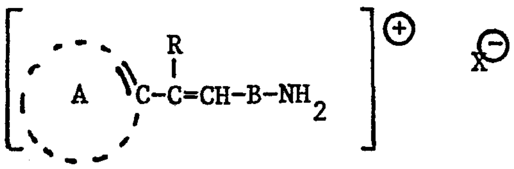

(IV)

diazotiert und auf eine Kupplungskomponente HKK kuppelt, wobei die allgemeinen Symbole wie in Formel (I) definiert sind.

Die Diazotierung und die Kupplungsreaktion wird in üblicher Weise durchgeführt, zweckmässig in wässrigem, saurem bis schwach alkalischem Medium.

Die erhaltenen, erfindungsgemässen Methinazoverbindungen werden in üblicher Weise vom Reaktionsmedium isoliert oder das Herstellungsverfahren wird so geleitet, dass sofort eine gebrauchsfertige, konzentrierte Lösung erhalten wird.

Wird die Verbindung isoliert, so erfolgt entweder Trocknung oder aus der isolierten Paste wird direkt die gewünschte Lösung hergestellt.

Die Kupplungskomponenten H-KK sind bekannt oder können nach bekannter Art und Weise erhalten werden. Es wird auf die eingangs genannten Kupplungskomponenten KK verwiesen.

Die Methinverbindungen der Formel (IV) sind zum Teil bekannt (siehe z.B. DE-A-2 161 413, Zhurnal Obshchei Khimii, Vol. 43, Nr. 8, p. 1789-1794, Aug. 1973; US-A- 3 185 538, US-A-3 192 195, FR-A-1 391 408, DE-A-1 248 192) oder können nach an sich bekannten Methoden hergestellt werden. Im nachfolgenden Beispielteil wird die Herstellung einiger Methinverbindungen der Formel (IV) ausführlich beschrieben.

Man erhält diese Verbindungen beispielsweise, wenn man Quartärsalze der Formel

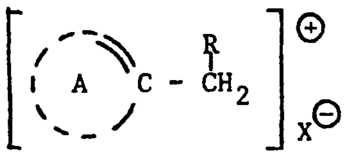

(V),

worin die Symbole A, R und X die angegebene Bedeutung haben, mit gegebenenfalls substituierten Aminobenzaldehyden oder Aminonaphthaldehyden oder Derivaten davon (z.B. Immoniumsalzen) kondensiert.

Die Kondensation wird bei Temperaturen zwischen 20 und 140°C, vorzugsweise zwischen 50 bis 110°C in einem organischen Lösungsmittel durchgeführt. Als solches eignen sich beispielsweise Alkohole, wie Methanol, Aethanol, die Propanole und Butanole; ferner Benzylalkohol,Essigsäureäthylester, Benzoesäuremethylester, Ameisensäure, Essigsäure, $C_2$-$C_5$-Glykole, Dimethylformamid, Dimethylacetamid, Tetramethylharnstoff, Acetonitril und Benzonitril. Zur Beschleunigung der Kondensationsreaktion können basische Katalysatoren zugesetzt werden, wie beispielsweise Triäthylamin, Pyridin, Piperidin, N-Aethylpyridin, N-Methylmorpholin, Alkalicarbonate, Alkaliacetate und Acetate anorganischer oder organischer Stickstoffbasen wie Ammoniumacetat oder Piperidinacetat.

Die Quartärsalze der Formel (V) sind bekannt und können nach bekannter Art und Weise hergestellt werden.

Die freie Aminogruppe der Aminoaldehyde kann gegebenenfalls vor der Kondensation durch eine Acetylgruppe geschützt werden, die anschliessend durch saure Verseifung wieder abgespalten wird.

Die Herstellung der erfindungsgemässen Methinazo-Verbindungen kann aber auch so erfolgen, dass man z.B. zuerst ein Aminobenzaldehyd oder Aminonaphthaldehyd der Formel $H\underset{\overset{\|}{O}}{C}-B-NH_2$ diazotiert und auf die Kupplungskomponente KKH kuppelt und die erhaltene Azoverbindung der Formel $H\underset{\overset{\|}{O}}{C}-B-N=N-KK$ mit einem Quartärsalz der Formel (V) kondensiert. Die bevorzugten Reaktionsbedingungen für die Kondensation entsprechen jenen, die vorstehend bei der Herstellung der Verbindungen der Formel (IV) beschrieben wurden. Die Diazotierung und Kupplung erfolgt in bekannter Weise.

Verwendung finden die Methinazoverbindungen der Formel (I) und die Methinverbindungen der Formel (IV) vor allem als Farbstoffe zum Färben und Bedrucken von kationisch färbbaren Substraten, wie Wolle, Seide, Leder, sauer modifizierten Polyamidmaterialien, Polyacrylnitrilmaterialien, basisch färbbaren, modifizierten Polyestermaterialien,natürlichen und regenerierten Cellulosematerialien wie Baumwolle und Viscose,wobei diese Verbindungen ein gutes Ziehvermögen aufweisen und man brillante Ausfärbungen erhält, die gute Echtheiten aufweisen; sie sind besonders durch ihre hohe Farbstärke gekennzeichnet.

Eine bevorzugte Verwendung der erfindungsgemässen Methinazofarbstoffe der Formel (I) liegt in der Anwendung zum Färben von Papier aller Arten, vor allem von gebleichtem, ungeleimtem und geleimtem ligninfreiem Papier. Ganz besonders geeignet sind die Verbindungen zum Färben von ungeleimtem Papier (Tissues) als Folge ihrer sehr hohen Standard-Affinität zu diesem Substrat.

Die erfindungsgemässen Methinazoverbindungen ziehen sehr gut auf diese Substrate, wobei die Abwasser farblos bleiben, was ein grosser technischer und ökologischer Vorteil, insbesondere im Hinblick auf die heutigen Abwassergesetze ist. Der gute Ausziehgrad ist auch für eine gute Reproduzierbarkeit der Nuance von Vorteil. Der Ausziehgrad wird von der Wasserhärte nicht beeinflusst. Die Papier-Färbungen sind vor allem

gekennzeichnet durch ihre Farbstärke, Lichtechtheit und hohe Affinität; sie zeigen keine Neigung zum Ausbluten, wenn gefärbtes Papier in nassem Zustand mit feuchtem weissem Papier in Berührung gebracht wird. Diese Eigenschaft ist besonders für sogenannte "Tissues" erwünscht, bei denen vorhersehbar ist, dass das gefärbte Papier in nassem Zustand (z.B. getränkt mit Wasser, Alkohol, Tensid-Lösung) in Berührung mit anderen Flächen, wie z.B. aus Textilien oder Papier kommt, die gegen Verschmutzung geschützt werden müssen.

Die hohe Affinität für Papier und die grosse Ausziehgeschwindigkeit der erfindungsgemässen Methinazofarbstoffe ist für das Kontinue-Färben von Papier von grossem Vorteil, und ermöglicht somit einen sehr breiten Einsatz.

Die Methinazofarbstoffe werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, Natriumphosphat, Natriumchlorid, Natriumacetat in Gegenwart von Entstäubungsmitteln eingesetzt, oder die Methin-azo-farbstoffe werden als Sprühtrocknungspräparationen in den Handel gebracht. Konzentrierte Lösungen können wässriger oder organisch/wässriger Art sein, wobei übliche Zusätze, wie organische Säuren,z.B. Essigsäure, Ameisensäure, Milchsäure, Amide wie Formamid, Dimethylformamid, Harnstoff, Alkohole wie Glykol, Diglykol, Diglykoläther vor allem der Methyl- oder Aethyläther bevorzugt werden.

Eine günstige Zusammensetzung solcher flüssigen Präparate ist beispielsweise die folgende:

100 Teile einer Methinazoverbindung der Formel (I) ,
1-100 Teile einer organischen Säure wie Ameisen-, Essig-, Milch-, Zitronensäure,

100-800 Teile Wasser und

0-500 Teile eines Lösungsvermittlers (z.B. Glykole wie Diäthylenglykol, Triäthylenglykol, Hexylenglykol, Glykoläther wie Methylcellosolve, Methylcarbitol, Butylpolyglykol, Harnstoff, Formamid, Dimethylformamid).

Die nachfolgenden Beispiele veranschaulichen die Erfindung sowie die Herstellung der Ausgangsprodukte weiter. Teile- und Prozentangaben beziehen sich darin auf das Gewicht, sofern nichts anderes angegeben ist.

## A) AUSGANGSPRODUKTE

### Beispiel 1:

a) 85,8 g N-Methyl-4-methyl-pyridiniumchlorid und 103,1 g 4-Acetaminobenzaldehyd werden in 720 ml Isopropanol bei Raumtemperatur suspendiert. Man gibt 10 ml Piperidin hinzu und erhitzt 2 Stunden lang auf Rückfluss. Man lässt zunächst unter Rühren auf Raumtemperatur abkühlen und kühlt schliesslich noch im Eisbad. Dann wird die gelblichbraune Kristallmasse abgenutscht und mit total 150 ml kaltem Isopropanol nachgewaschen. Nach der Trocknung erhält man 155 g eines gelben Kristallpulvers.

b) 57,7 g des nach a) erhaltenen Pulvers werden in einer Lösung aus 200 ml Wasser und 200 ml Salzsäure (32 %) 1 Stunde lang auf Rückfluss erhitzt. Die entstandene gelbe Lösung wird nach dem Erkalten mit Wasser auf ein Gewicht von 493 g eingestellt. Diese Lösung wird telquel zur Diazotierung eingesetzt, sie enthält die Verbindung der Formel

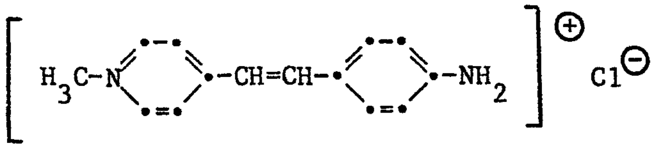 .

Beispiele 2-13: Ersetzt man im Beispiel 1a) das N-Methyl-4-methyl-pyridinium-chlorid durch die in Tabelle 1, Kol. II aufgeführten Quartärsalze und verfährt im übrigen analog zu Beispiel 1, so erhält man die in Kol. III angegebenen Produkte.

Tabelle I

| I | II | | III | |
|---|---|---|---|---|
| Bsp. | Quartärsalze | | Produkte R = 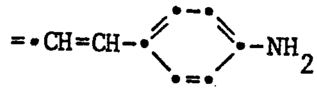 | |
| 2 | 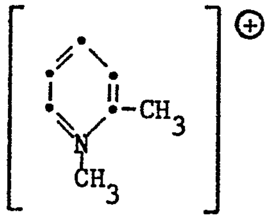 | Cl⊖ | 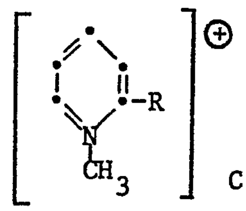 | Cl⊖ |
| 3 | 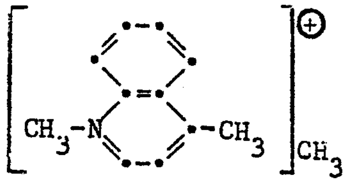 | $CH_3SO_4^{\ominus}$ | 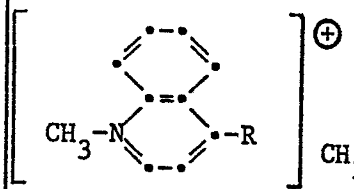 | $CH_3SO_4^{\ominus}$ |
| 4 | 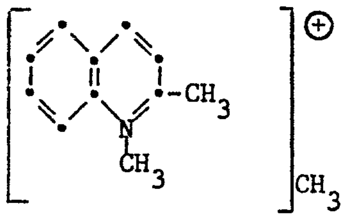 | $CH_3SO_4^{\ominus}$ | 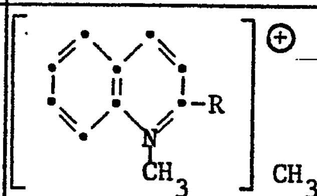 (liegt als Suspension vor) | $CH_3SO_4^{\ominus}$ |
| 5 | 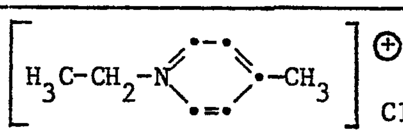 | Cl⊖ | 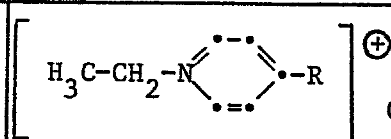 | Cl⊖ |
| 6 | 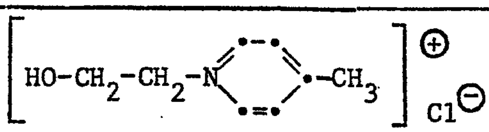 | Cl⊖ | 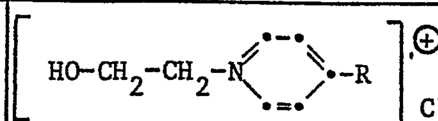 | Cl⊖ |
| 7 | 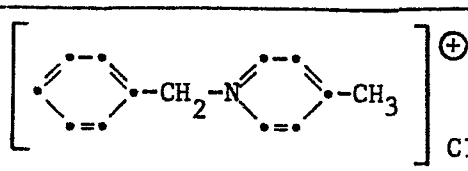 | Cl⊖ | 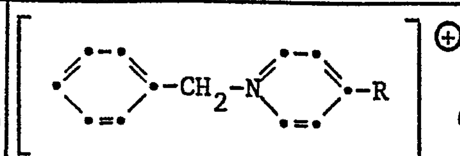 | Cl⊖ |
| 8 | 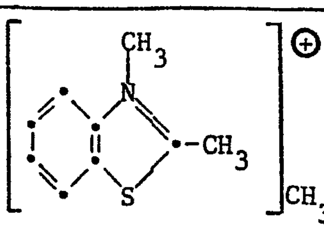 | $CH_3SO_4^{\ominus}$ | 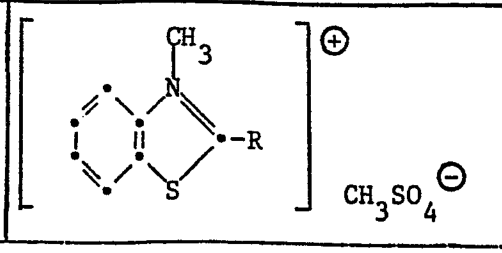 | $CH_3SO_4^{\ominus}$ |

Tabelle I (Fortsetzung)

| I | II | III |
|---|---|---|
| Bsp. | Quartärsalze | Produkte R = –CH=CH– 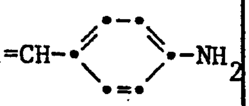 |
| 9 | 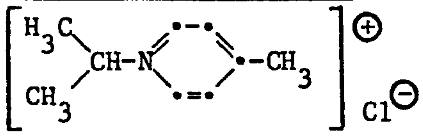 Cl⊖ | 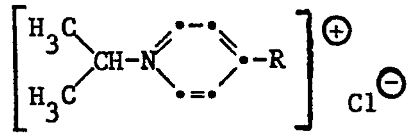 Cl⊖ |
| 10 | 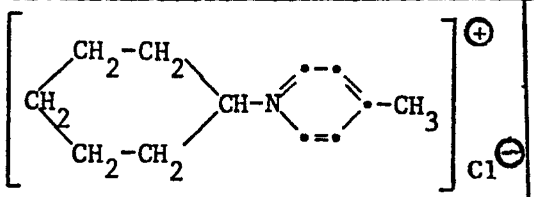 Cl⊖ | 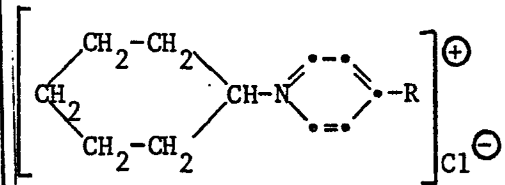 Cl⊖ |
| 11 | 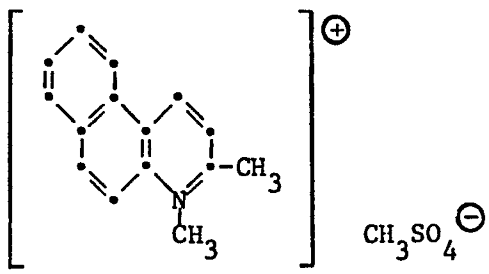 $CH_3SO_4^{\ominus}$ | 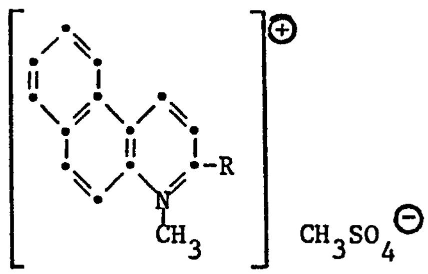 $CH_3SO_4^{\ominus}$ |
| 12 | 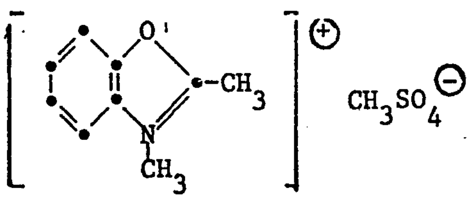 $CH_3SO_4^{\ominus}$ | 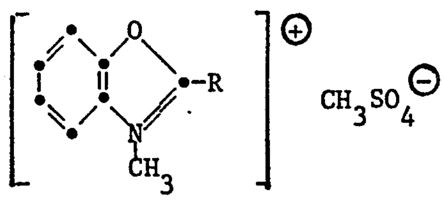 $CH_3SO_4^{\ominus}$ |
| 13 | 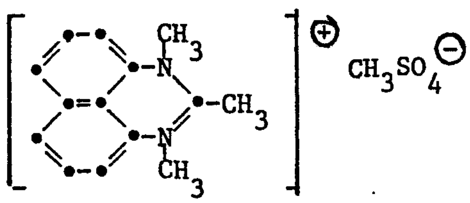 $CH_3SO_4^{\ominus}$ | 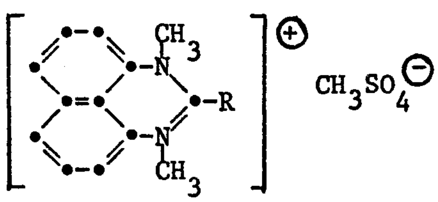 $CH_3SO_4^{\ominus}$ |
| 13a | 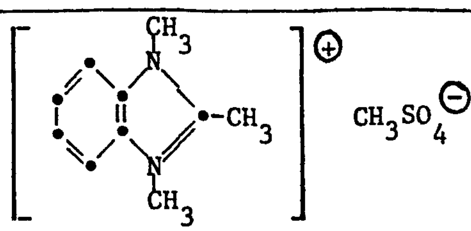 $CH_3SO_4^{\ominus}$ | 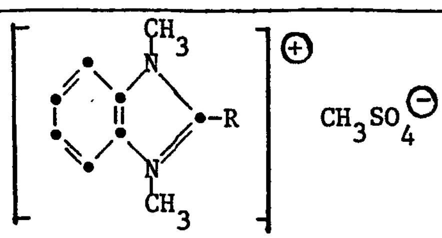 $CH_3SO_4^{\ominus}$ |

Beispiel 14: 24,5 g des Hydrochlorids der Chlor-Fischerbase (1,2,3,3-Tetramethyl-5-chlorindolenins) und 17,3 g 4-Acetaminobenzaldehyd werden in 750 ml n-Butanol 1 Stunde lang auf Rückfluss erhitzt. Die intensiv rote Lösung wird am Rotationsverdampfer auf ein Volumen von ca. 200 ml eingeengt und nach dem Erkalten mit ca. 600 ml Aether gefällt. Das ausgefallene Produkt wird abfiltriert, mit Aether gewaschen und getrocknet. Man erhält 41,3 g eines roten Pulvers. Dieses wird in 400 ml Wasser und 400 ml konz. Salzsäure eine Stunde lang am Rückfluss erhitzt. Nach dem Erkalten wird filtriert, mit Wasser gewaschen und getrocknet.
Man erhält 22,15 g des Ausgangsproduktes der Formel

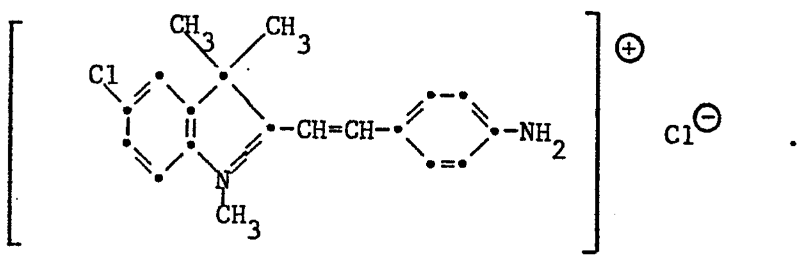

Beispiel 15: Analog zu Beispiel 14 wird aus der Fischerbase die Verbindung der Formel

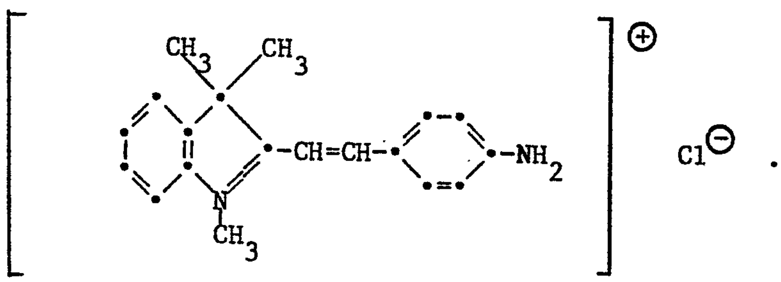

hergestellt.

Beispiel 16: 47,5 g 4-Picolin werden mit 150 ml Isopropanol und 81,3 g Phenacylchlorid in einem Autoklaven 3 Stunden auf 150°C erhitzt. Nach dem Abkühlen wird die braune Suspension filtriert und gut mit Aether gewaschen. Nach der Trocknung erhält man 113 g eines beigen Kristallpulvers.

49,5 g dieses Pulvers werden in 240 ml Isopropanol mit 34,3 g 4-Acetaminobenzaldehyd und 3,5 ml Piperidin 32 Stunden auf Rückfluss erhitzt. Nach Abkühlen im Eisbad wird filtriert und der Rückstand mit wenig Isopropanol nachgewaschen. Der Rückstand wird in 300 ml n-Butanol rekristallisiert; man erhält 44,6 g eines rotbraunen Pulvers.

19,6 g dieses Pulvers werden in 50 ml heissem Eisessig gelöst und dann mit 50 ml Wasser und 50 ml 32%-iger Salzsäure versetzt. Nach einer Stunde Rückfluss lässt man kaltrühren, kühlt dann im Eisbad, filtriert und wäscht mit wenig kaltem Wasser nach. Nach Trocknung erhält man 9,3 g der Verbindung der Formel

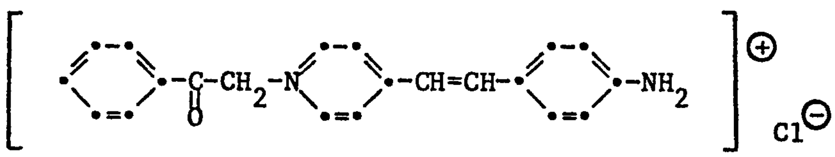 .

Beispiel 17: 5,5 g N-Methyl-4-methyl-pyridiniumchlorid, 5 g 2-Aminobenzaldehyd und 0,65 ml Piperidin werden in 75 ml Isopropanol 5 Stunden lang unter Rückfluss erhitzt. Dann werden während einer weiteren Stunde ca. 70 ml Lösungsmittel abdestilliert. Zum erkalteten, öligen Rückstand tropft man unter Rühren langsam 400 ml Aceton und rührt eine Nacht lang nach. Der teils kristalline, teils schmierige Rückstand wird abfiltriert, erneut in 20 ml Methanol gelöst, klarfiltriert und wieder mit 1 l Aceton gefällt. Der ausgefallene Rückstand wird filtriert und getrocknet. Man erhält 4,5 g der Verbindung der Formel

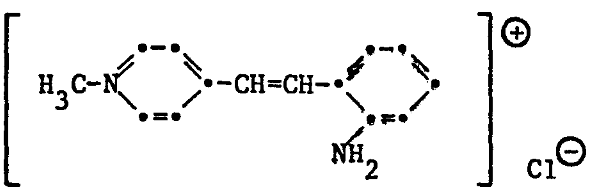 .

B) <u>ENDPRODUKTE</u>

Beispiel 18: 12,8 g der unter Beispiel 1b beschriebenen Lösung werden auf 0-5°C gekühlt und mit 5,0 ml 1 N Natriumnitritlösung diazotiert. Nach 1/2-stündigem Nachrühren bei 0-5°C wird ein allfälliger Nitritüberschuss mit wenig Sulfaminsäure zerstört. Es resultiert eine gelbe Lösung.

Diese Diazolösung wird zu 0,65 g Barbitursäure, gelöst in 30 ml einer Mischung aus Dimethylformamid und Wasser im Verhältnis 1:1, zugegeben. Es entsteht eine schwach orangegelbe Lösung. Nun wird der pH mit krist. Na-acetat auf ca. 4-5 gestellt. Der Farbstoff fällt dabei in kristalliner Form aus. Man rührt 2 Stunden bei Raumtemperatur nach, filtriert ab und wäscht mit 5%-iger Sole nach. Nach der Trocknung erhält man die Verbindung der Formel

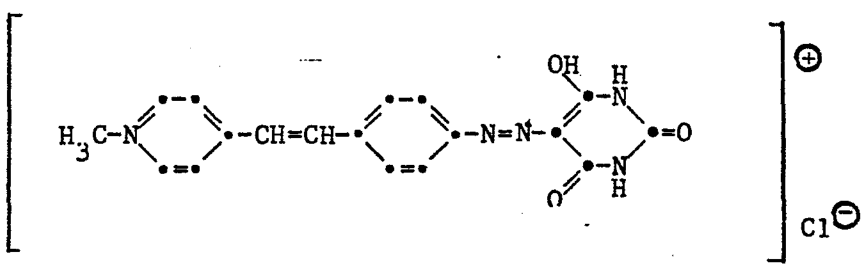

als gelbes Pulver mit einem Schmelzpunkt von >280°C, welches sehr gut wasserlöslich ist und sich hervorragend zum Färben von Papier und Polyacrylnitril in gelben Farbtönen eignet.

Beispiele 19-22: Verfährt man wie im Beispiel 18 angegeben, verwendet jedoch die in folgender Tabelle 2, Kol. II, angegebenen Kupplungskomponenten, so erhält man Verbindungen der Formel

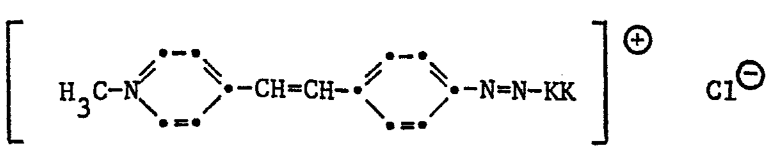

deren Nuance auf Papier und Polyacrylnitril in Kol. III angegeben ist.

Tabelle 2

| I | II | III |
|---|---|---|
| Bsp. Nr. | H-KK | Nuance |
| 19 | 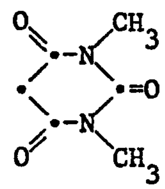 | gelb |
| 20 | 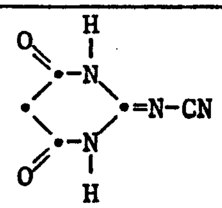 | gelb |
| 21 | 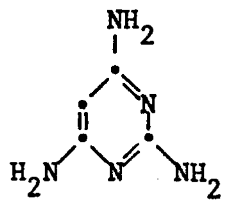 | orange |
| 22 | 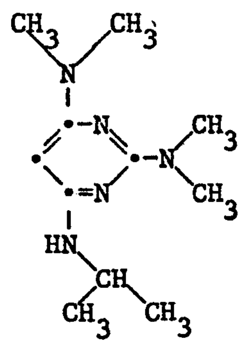 | blaurot |

Beispiel 23: Man diazotiert die Verbindung gemäss Beispiel 1b und giesst dann auf eine Lösung von 1,1 g der Verbindung der Formel

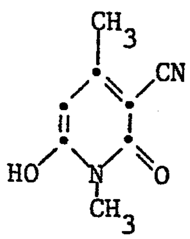

in 12 ml Wasser und 5 ml 1 N Natronlauge. Es entsteht sofort eine orange Suspension. Der pH wird mit konz. Sodalösung auf 5 gestellt und weitere 30 ml Wasser zugefügt, da die Suspension sonst zu dick wird. Nach 2-stündigem Nachrühren wird abfiltriert und mit wenig 2%-iger Sole nachgewaschen. Nach der Trocknung erhält man 2,2 g eines dunkelbraunen Pulvers der Formel

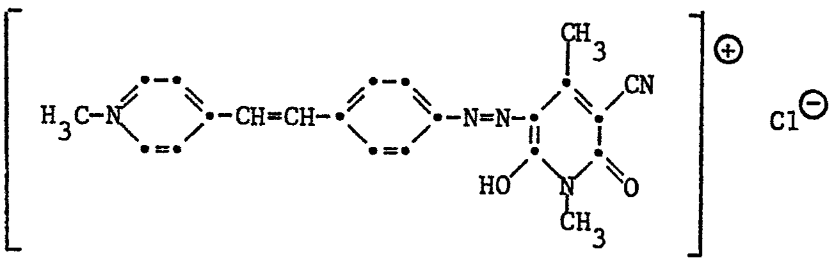

das sehr gut wasserlöslich ist und sowohl Papier wie Polyacrylnitril in orangen Tönen färbt.

Beispiel 24: Man diazotiert die Verbindung gemäss Beispiel 1b und giesst dann auf 12,2 g der nach der DE-A-2 915 323, Beispiel d, erhaltenen Kupplungskomponente. Der pH wird mit konz. Sodalösung auf 5 gestellt. Nach 2-stündigem Nachrühren ist keine Diazoverbindung mehr nachweisbar. Der pH wird nun mit konz. Sodalösung auf 10 gestellt, wobei sich ein öliger Niederschlag an den Wänden niederschlägt. Die Mutterlauge wird dekantiert und der Rückstand bei 70° im Vakuum getrocknet, wobei er kristallin erstarrt. Man erhält 4,6 g eines schwarzen Pulvers der folgenden Konstitution

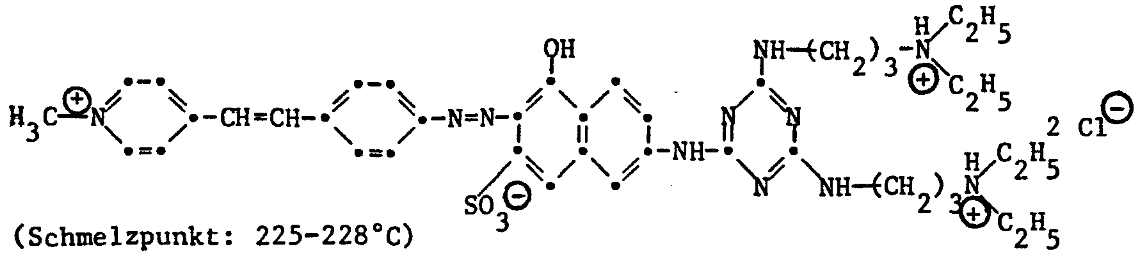

(Schmelzpunkt: 225-228°C)

das sich in 5%-iger Essigsäure gut löst und Papier in einer stark blaustichig roten Nuance färbt.

Beispiel 25: Verwendet man im Beispiel 24 statt der angegebenen Kupplungskomponente die nach analogem Verfahren hergestellte Kupplungskomponente der Formel

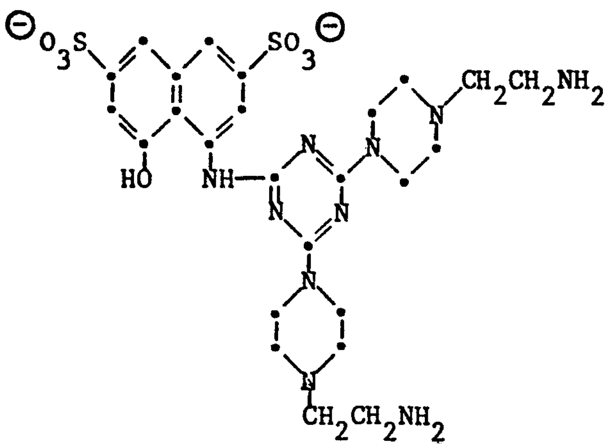

und verfährt im übrigen wie beschrieben, so erhält man 4,4 g des Farbstoffes der Formel

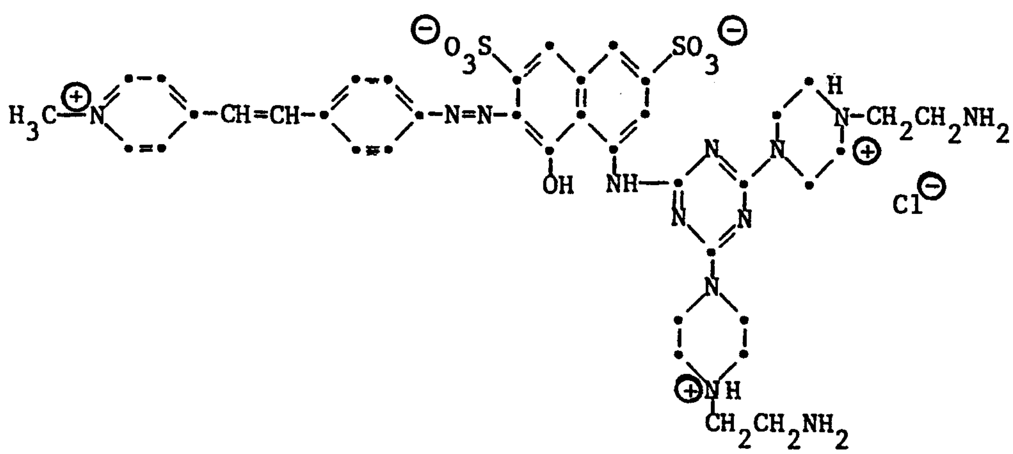

der Papier in violettblauer Nuance färbt.

Beispiel 26: Man diazotiert die Verbindung gemäss Beispiel 1b und giesst auf eine Lösung von 1,98 g der Verbindung der Formel

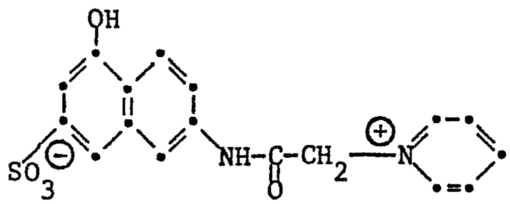

in 40 ml Wasser und 5 ml 1 N Natronlauge. Der pH-Wert wird dann mit konz. Sodalösung auf 5 gestellt und die violette Suspension 2 Stunden bei Raumtemperatur nachgerührt. Dann wird filtriert und mit 5%-iger NaCl-Lösung gewaschen. Nach dem Trocknen erhält man 2,6 g des Farbstoffes der Formel

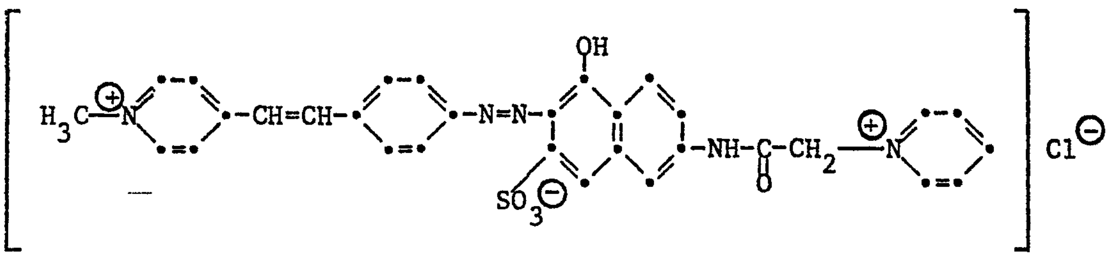

der Papier in einem sehr stark blaustichigen Rot färbt.

Beispiel 27: 17 g einer 9,7%-igen, wässrigen, salzsauren Lösung des Ausgangsproduktes gemäss Beispiel 7 wird bei 0-5°C mit 5,1 ml 1 N Natriumnitritlösung diazotiert. Nach einer halben Stunde Nachrührzeit bei 0-5°C ist die Diazoverbindung praktisch gelöst. Sie wird nun zu 0,66 g 2,4,6-Triaminopyrimidin in 10 ml Wasser gegossen und der pH mit konz. Sodalösung auf 5 gestellt. Es wird noch eine halbe Stunde bei Raumtemperatur nachgerührt, filtriert und mit Wasser gewaschen. Nach dem Trocknen erhält man 2,35 g des Farbstoffes der Formel

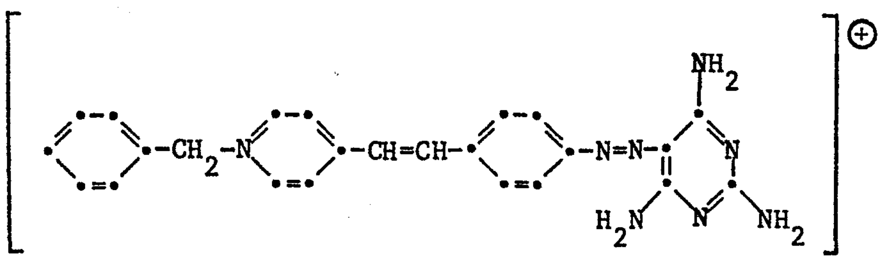

der Papier in orangefarbener Nuance färbt.

Beispiele 28-31: Ersetzt man in den Beispielen 19, 18, 21 und 24 das Ausgangsprodukt gemäss Beispiel 1b jeweils durch das Ausgangsprodukt gemäss Beispiel 2, so erhält man die Farbstoffe der Formel

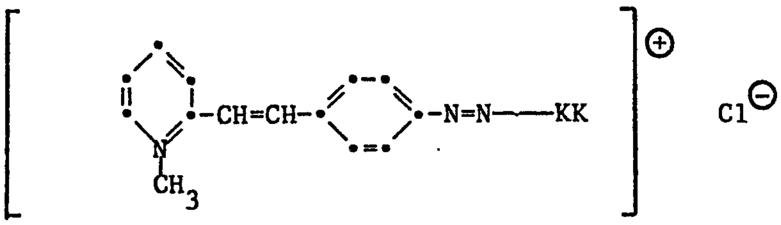

| | KK |
|---|---|
| Beispiel 28 | 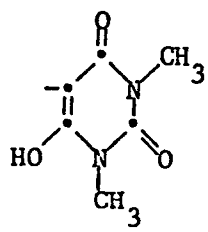 |
| Beispiel 29 | 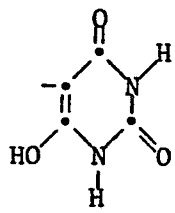 |
| Beispiel 30 | 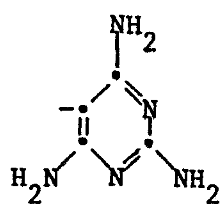 |
| Beispiel 31 | 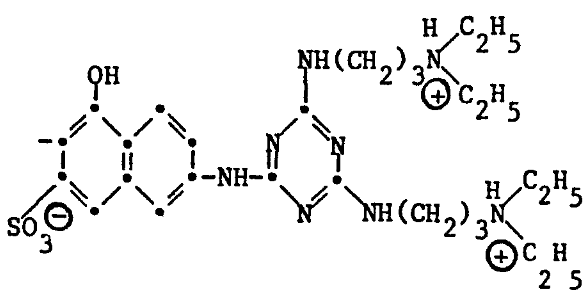 |

Die Nuance dieser Produkte auf Papier ist gegenüber den analogen 4-Picolin-farbstoffen leicht hypsochrom verschoben.

Beispiel 32: 19,1 g der unter Beispiel 4 beschriebenen salzsauren Suspension wird kurz aufgekocht und geht dabei in Lösung. Man giesst auf 25 g Eis, kühlt ausserdem im Eisbad und gibt 5 ml 1 N Natriumnitritlösung hinzu. Nach einer halben Stunde Nachrührzeit bei 0-5°C ist fast alles gelöst. Diese Diazolösung wird durch Glaswolle klärfiltriert und zu einer Lösung von 0,65 g Triaminopyridin, gelöst in 30 ml Dimethylformamid und 30 ml Wasser, gegossen. Man stellt den pH mit krist. Natriumacetat auf 4-5 und rührt 2 Stunden bei Raumtemperatur nach. Die sehr feine Suspension wird filtriert und mit 5%-iger Na Cl-Lösung gewaschen. Man erhält so 2,3 g der Verbindung der Formel

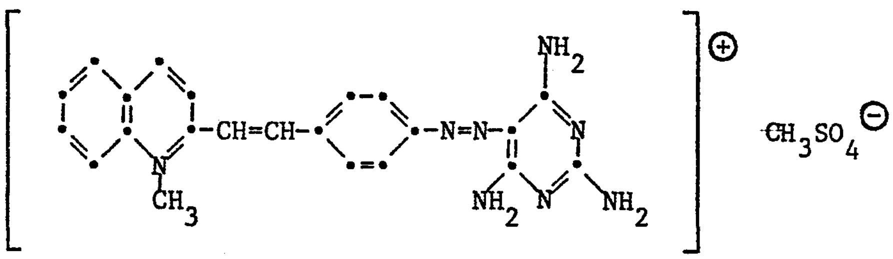

die Papier in einem rotstichigen Braun färbt.

Beispiel 33: Ersetzt man in Beispiel 32 das Triaminopyrimidin durch die Kupplungskomponente aus Beispiel 24, so erhält man den Farbstoff der Formel

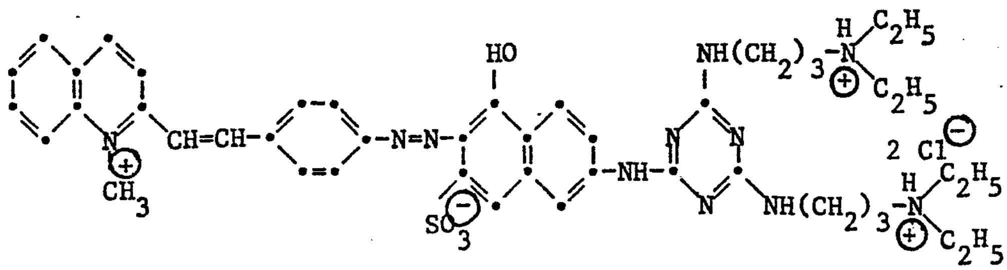

der auf Papier eine violette Nuance von hoher Farbstärke liefert.

Beispiel 34: Ersetzt man im Beispiel 32 das Ausgangsprodukt gemäss Beispiel 4 durch die Suspension des Ausgangsproduktes gemäss Beispiel 3, verfährt sonst wie in Beispiel 32 und fügt vor der Filtration noch 20 g Kochsalz hinzu, so erhält man 1,5 g der Verbindung der Formel

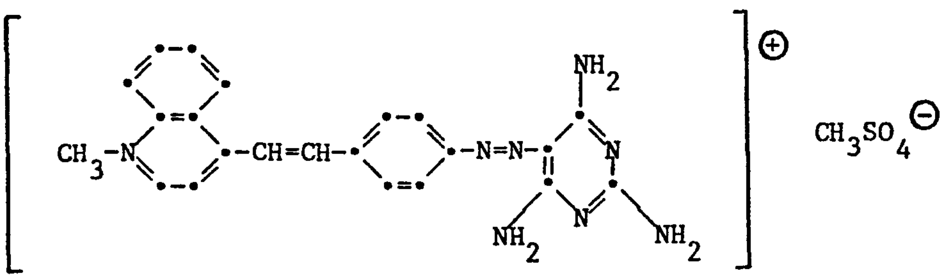

der Papier in einem stark rotstichigen Braun färbt.

Beispiel 35: Ersetzt man im Beispiel 34 das Triaminopyrimidin durch Barbitursäure, so erhält man den orangen Farbstoff der Formel

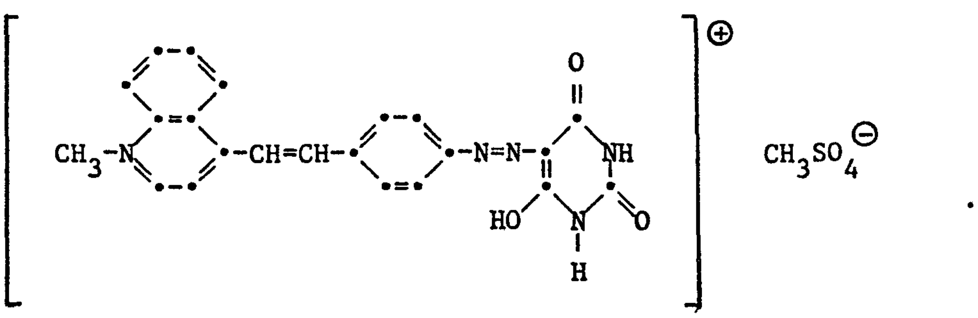

Beispiel 36: 2,8 g des Ausgangsproduktes gemäss Beispiel 13a werden in 50 ml Wasser und 2,25 ml 30%-iger Salzsäure mit Natriumnitrit diazotiert. Die Diazolösung wird zu einer Lösung von 0,95 g Triaminopyrimidin, gelöst in 20 ml Dimethylformamid und 20 ml Wasser, gegossen und der pH auf 5,2 gestellt. Nach 3 Stunden Rührzeit wird filtriert, mit wenig 5%-iger NaCl-Lösung gewaschen und getrocknet. Man erhält so die Verbindung der Formel

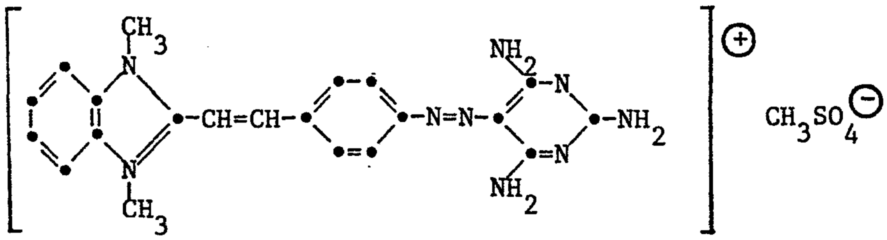

die Papier in einem orangen Farbton mit guten Echtheiten färbt.

Beispiel 37: Verwendet man in Beispiel 36 statt Triaminopyridin die äquivalente Menge an β-Naphthol, so erhält man die Verbindung der Formel

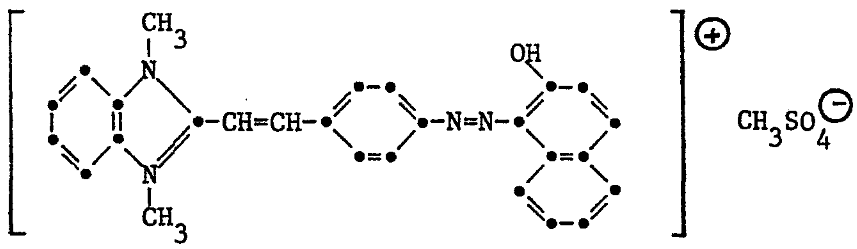

welche Papier in einem blaustichig roten Farbton mit guten Echtheiten färbt.

Beispiel 38: 0,2 g des gemäss Beispiel 23 hergestellten Farbstoffes werden mit 2 g 40%-iger wässriger Essigsäure angeteigt und durch Zugabe von 4000 ml heissem Wasser in Lösung gebracht. Man setzt noch 1 g Natriumacetat und 2 g eines mit Dimethylsulfat quaternisierten Anlagerungsproduktes von 15 bis 20 Aequivalenten Aethylenoxid an N-Octadecyldiäthylentriamin zu und geht mit 100 g Polyacrylnitrilgewebe bei 60°C ein.Innerhalb 30 Minuten erhitzt man das Bad auf 100°C und färbt dann kochend während 90 Minuten. Hierauf lässt man die Flotte im Verlauf von 30 Minuten bis auf 60°C abkühlen.Das so gefärbte Material wird dann herausgenommen und anschliessend mit lauwarmen und kaltem Wasser gespült. Man erhält ein orange gefärbtes Polyacrylnitrilgewebe. Die Färbung weist eine gute Lichtechtheit auf.

Beispiel 39: Ein Polyacrylnitril-Mischpolymerisat bestehend aus 93 % Acrylnitril und 7 % Vinylacetat wird in Dimethylacetamid zu 15 % gelöst. Die Spinnflüssigkeit wird in ein Spinnbad extrudiert, welches aus 40 % Dimethylacetamid und 60 % Wasser besteht. Anschliessend wird das entstandene Spinnkabel nach bekannten Methoden verstreckt und durch Spülen mit heissem und kaltem Wasser vom Dimethylacetamid befreit.

Dieses nasse Spinnkabel wird durch Tauchen in einem Bad von 42° folgender Zusammensetzung gefärbt:

4,5 g/l Farbstoff gemäss Beispiel 21
pH 4,5 mit Essigsäure.

Die Kontaktzeit Faserkabel-Färbeflotte beträgt 3-5 Sekunden. Anschliessend wird die überschüssige Farbflotte abgequetscht und das Spinnkabel dem Trockner zugeführt. Es resultiert ein orange gefärbtes Faserkabel mit guten Echtheiten.

Beispiel 40: Man bereitet eine Druckpaste, bestehend aus:

10 g des gemäss Beispiel 24 erhaltenen Farbstoffes,
30 g Thiodiglykol,
20 ml Essigsäure (80%-ig),
350 ml kochendem Wasser,
500 g Johannisbrotkernmehlverdickung,
30 g Weinsäure,
15 g Di-(β-cyanäthyl)-formamid und
30 g eines Naphthalinsulfonsäureformaldehyd-Kondensationsproduktes.

Ein mit dieser Druckpaste bedrucktes Polyacrylnitril-Gewebe wird danach auf einem HT-Hängeschleifendämpfer 20 bis 30 Minuten bei 101° bis 103°C fixiert und wie üblich fertiggestellt. Man erhält einen blaustichig roten Druck.

Beispiel 41: Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 18 unter starker Turbulenz dem Dünnstöff kontinuierlich zudosiert (0,2%-ige Färbung, Flottenverhältnis 1:400, Wasserhärte 10° dH, pH 6, Temperatur 20°).

Es entsteht auf der Papierbahn eine gelbe Nuance. Das Abwasser ist völlig farblos.

Beispiel 42: Man vermischt 50 g chemisch gebleichtes Buche-Sulfit mit 50 g gebleichtem Fichte-Sulfit (Mahlgrad 22° SR) und 0,2 g des Farbstoffes gemäss Beispiel 29 in Wasser (pH 6, Wasserhärte 10° dH, Temperatur 20° C, Flottenverhältnis 1:40). Nach 15-minütigem Rühren werden Papierblätter auf einem Frank-Blattbildner hergestellt.

Das Papier ist in einer sehr intensiven gelben Nuance gefärbt. Das Abwasser ist völlig farblos. Der Ausziehgrad erreicht praktisch 100 %. Die Nassechtheiten sind ausgezeichnet.

Setzt man in den Beispielen 38-42 die übrigen Verbindungen gemäss Beispielem 18-37 als Farbstoffe ein, so erhält man ebenfalls gute und echte Färbungen auf den jeweiligen Substraten.

Patentansprüche

1. Methinazoverbindungen der Formel

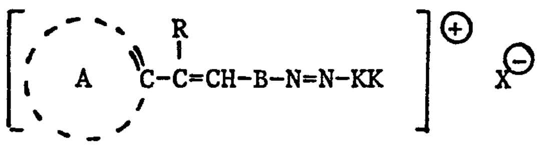

(I),

worin

A die Ergänzung zu einem heterocyclischen 5- oder 6-gliedrigen Ring mit einem quaternierten N-Atom als Ringglied, der weitere Heteroatome enthalten kann und der gegebenenfalls substituiert und/oder mit carbo- oder heterocyclischen Ringen kondensiert sein kann,

R Wasserstoff, Cyano oder $C_2$-$C_3$-Alkylen, das mit einem N-Atom des Ringes A zu einem 5- oder 6-gliedrigen Ring verbunden ist,

B gegebenenfalls substituiertes Phenylen oder Naphthylen,

$X^{\ominus}$ ein Anion und

KK den Rest einer Kupplungskomponente der Benzolreihe, der Naphthalinreihe oder der heterocyclischen Reihe bedeuten,

mit den Massgaben, dass

a) für den Fall, dass A die Ergänzung zu einem quaternierten, gegebenenfalls substituierten Pyridin-, Chinolin- oder Indoleninrest ist, KK nicht für den Rest einer gegebenenfalls substituierten Phenol-, sulfogruppenfreien Naphthol-, Naphthylamin-, Anilin-, Chinolin-, Isochinolin-, Pyrazol- oder Indol-Kupplungskomponente steht und

b) für den Fall, dass A die Ergänzung zu einem quaternierten, gegebenenfalls substituierten Benzthiazol- oder Perimidinrest ist, KK nicht für eine gegebenenfalls substituierte Phenol- oder Anilin-Kupplungskomponente steht.

2. Methinazoverbindungen nach Anspruch 1, worin A, R, B und $X^{\ominus}$ wie in Anspruch 1 definiert sind und KK den Rest einer Kupplungskomponente der Benzolreihe, der Naphthalinreihe oder der heterocyclischen Reihe

mit Ausnahme einer gegebenenfalls substituierten Phenol-, Naphthylamin-, sulfogruppenfreien Naphthol-, Anilin-, Chinolin-, Isochinolin-, Pyrazol- oder Indol-Kupplungskomponente, bedeutet.

3. Methinazoverbindungen nach Anspruch 1 oder 2, worin R Wasserstoff bedeutet.

4. Methinazoverbindungen nach einem der Ansprüche 1-3, worin B Phenylen, vorzugsweise 1,4-Phenylen, bedeutet.

5. Methinazoverbindungen nach einem der Ansprüche 1-4, worin A die Ergänzung zu einem quaternierten gegebenenfalls substituierten oder/und mit carbocyclischen Ringen kondensierten Pyridin-, Pyrimidin-, Chinolin-, Thiazol-, Imidazol-, Oxazol-, oder Pyrrolring bedeutet.

6. Methinazoverbindungen nach Anspruch 5, worin A die Ergänzung zu einem quaternierten, gegebenenfalls substituierten oder/und mit carbocyclischen Ringen kondensierten Pyridinring bedeutet.

7. Methinazoverbindungen nach Anspruch 5, worin A die Ergänzung zu einem der folgenden Ringe

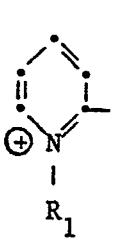 , 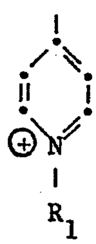 , 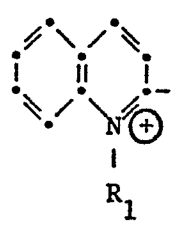 , 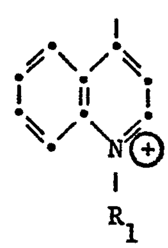 , 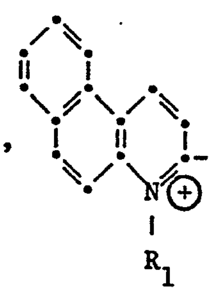

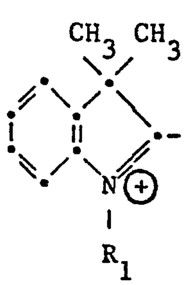 , 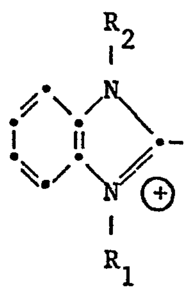 , 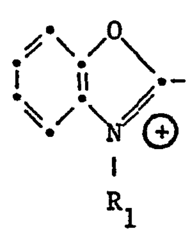 , 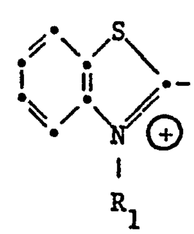

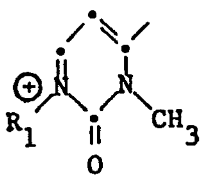, 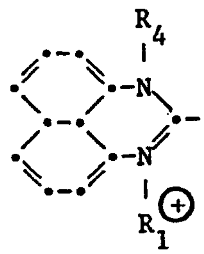, 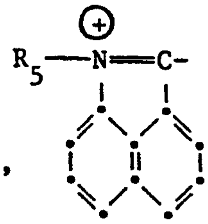 oder 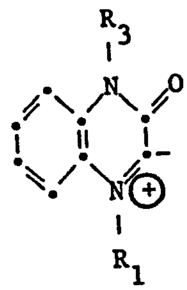

bedeutet,

wobei diese Ringe neben den Substituenten $R_1$-$R_5$ noch durch Nitro, Halogen, Cyano, $C_1$-$C_4$-Alkyl, $C_1$-$C_4$-Alkoxy, Acetylamino oder Dimethylamino substituiert sein können und worin $R_1$, $R_2$, $R_3$ und $R_4$ unabhängig voneinander $C_1$-$C_8$-Alkyl, $C_2$-$C_8$-Alkenyl oder $C_3$-$C_6$-Cycloalkyl bedeuten, wobei die Alkyl-, Alkenyl- oder Cycloalkylkette durch Sauerstoff- oder Stickstoffatome unterbrochen und/oder durch Halogen, Cyano, Hydroxy, Alkoxy, Phenyl, Phenoxy, Dialkylamino, Trialkylammonium, Acetylamino, Alkylcarbonyl, Alkoxycarbonyl, Alkyl-, Phenyl- oder Benzylsulfonyl, Alkyl-, Phenyl- oder Benzylsulfonamido, Alkylcarbonylamino, Benzoyl, Benzoylamino, Alkyl-, Phenyl- oder Benzylcarbamoyl, Alkyl-, Phenyl- oder Benzylcarbamoyloxy substituiert sein kann und $R_5$ für Phenyl steht oder die Bedeutung von $R_1$ hat.

8. Methinazoverbindungen nach Anspruch 7, worin A die Ergänzung zu einem der folgenden Ringe

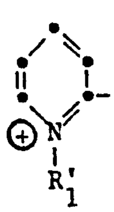, 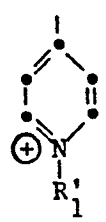, 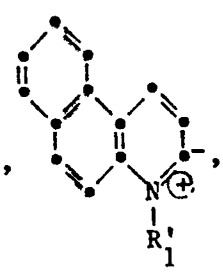, 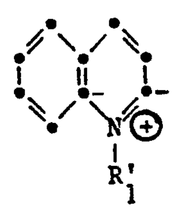, 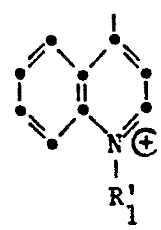

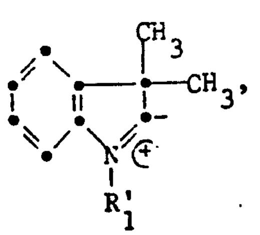, 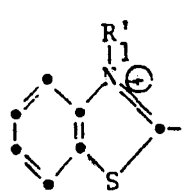 oder 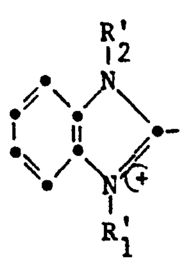 bedeutet,

worin $R_1'$ und $R_2'$ unabhängig voneinander für $C_1$-$C_4$-Alkyl, Benzyl, Cyclohexyl, Hydroxyalkyl oder $C_3$-$C_4$-Alkenyl stehen und die genannten Ringe ansonsten unsubstituiert oder durch Halogen, Cyano, $C_1$-$C_4$-Alkyl, $C_1$-$C_4$-Hydroxyalkyl oder $C_1$-$C_4$-Alkoxy substituiert sind.

9. Methinazoverbindungen nach Anspruch 8, worin A die Ergänzung zu einem Pyridinium- oder 3,3-Dimethylindoleniniumring bedeuten, worin $R_1'$ für Methyl steht.

10. Methinazoverbindungen nach einem der Ansprüche 1-9, worin KK den Rest eines(r) gegebenenfalls substituierten Phenols, Dihydroxybenzols, Anilins, Diphenylamins, Naphthols, Naphtholsulfonsäure, Dihydroxynaphthalins, Naphthylamins, Hydroxynaphthylamins, 2,6-Diamino- oder Dihydroxy-pyridins, Pyridons, Chinolins, Benzimidazols, Benzochinolins, Pyrimidins, Pyrimidons, Indols oder Pyrazols, bedeutet.

11. Methinazoverbindungen nach Anspruch 10,worin KK den Rest eines(r) gegebenenfalls substituierten Pyrimidons, Pyrimidins, 8-Hydroxychinolins, Benzimidazols, Naphthols, Pyridons, Naphtholsulfonsäure, Anilins oder Dihydroxybenzols bedeutet.

12. Methinazoverbindungen nach Anspruch 11, worin KK den Rest einer Kupplungskomponente der Formel

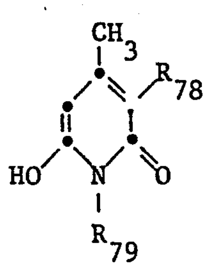 , 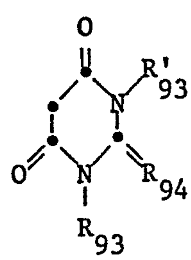 oder 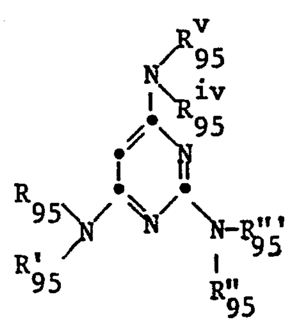

bedeutet, worin

$R_{78}$ CN, $CONH_2$, $SO_2NH_2$ oder $C_1$-$C_4$-Alkyl,
$R_{79}$ Wasserstoff oder gegebenenfalls substituiertes $C_1$-$C_8$-Alkyl,
$R_{93}$ und $R'_{93}$ unabhängig voneinander Wasserstoff oder $C_1$-$C_4$-Alkyl,
$R_{94}$ O oder N-CN und
$R_{95}$, $R'_{95}$, $R''_{95}$, $R'''_{95}$, $R^{iv}_{95}$ und $R^{v}_{95}$ jeweils unabhängig voneinander Wasserstoff, $C_1$-$C_4$-Alkyl, $C_2$-$C_4$-Alkenyl, Cyclopentyl, Cyclohexyl, Aryl, insbesondere Phenyl, Benzyl oder Phenäthyl bedeuten.

13. Methinazoverbindungen nach Anspruch 11, worin KK den Rest einer Kupplungskomponente der Formel

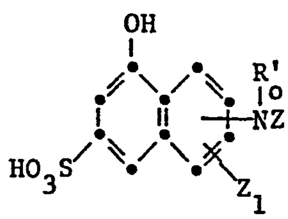 bedeutet,

worin $Z_1$ Wasserstoff oder Sulfo und Z -CO-Alkyl($C_1$-$C_4$)-$R_{18}$ oder

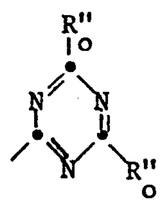 ,

$R'_o$ Wasserstoff oder $C_1$-$C_4$-Alkyl, $R_{18}$ eine basische Aminogruppe oder eine kationische Ammoniumgruppe, vorzugsweise Pyridinium, beide $R''_o$ unabhängig jeweils OH, $NH_2$ oder einen aliphatischen, cycloaliphatischen oder aromatischen Aminrest bedeuten.

14. Methinazoverbindungen nach Anspruch 13, worin $R''_o$ einem Aminrest der Formel $-NR_a-Q-NR_bR_c$ entspricht, worin $R_a$ Wasserstoff oder Methyl, Q $C_1$-$C_6$-Alkylen, $R_b$ und $R_c$ jeweils Wasserstoff, $C_1$-$C_4$-Alkyl, $C_1$-$C_4$-Hydroxyalkyl, $C_1$-$C_4$-Aminoalkyl oder zusammen mit dem N-Atom einen Piperidin-, Piperazin- oder Morpholinring bedeuten, wobei die Gruppe $NR_bR_c$ auch quaterniert sein kann, oder Q und $R_a$ + $R_b$

jeweils $-CH_2-CH_2$ bedeuten, wodurch eine Gruppe 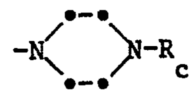 entsteht.

15. Methinazoverbindungen nach einem der Ansprüche 12-14, worin A die Ergänzung zu einem Ring der Formeln

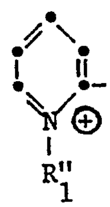 , 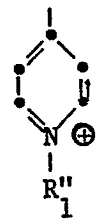 , 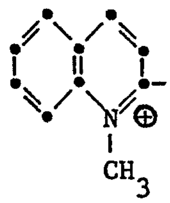 , 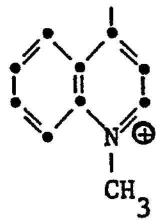 ,

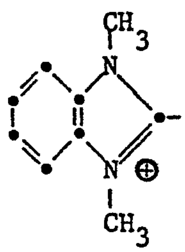 oder 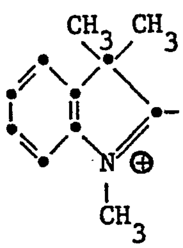 ,

worin $R_1''$ Methyl, Aethyl oder Benzyl bedeutet.

16. Methinazoverbindungen nach einem der Ansprüche 1-11 und 15, worin KK den Rest einer heterocyclischen Kupplungskomponente bedeutet.

17. Verfahren zur Herstellung der in Anspruch 1 definierten Methinazoverbindungen, dadurch gekennzeichnet, dass man Methinverbindungen der Formel

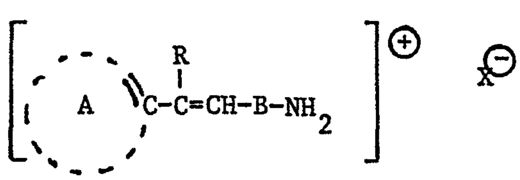

diazotiert und auf eine Kupplungskomponente HKK kuppelt, wobei die allgemeinen Symbole wie in Anspruch 1 definiert sind.

18. Verfahren zur Herstellung der in Anspruch 1 definierten Methinazoverbindungen, dadurch gekennzeichnet, dass man eine Azoverbindung der Formel

H
O=C-B-N=N-KK mit einer Verbindung der Formel 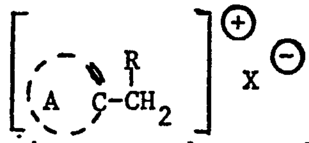
kondensiert, wobei die allgemeinen Symbole wie in Anspruch 1 definiert sind.

19. Verwendung der in Anspruch 1 definierten Methinazoverbindungen als Farbstoffe zum Färben oder Bedrucken von kationisch färbbaren Substraten.

20. Verwendung nach Anspruch 19 zum Färben oder Bedrucken von Polyacrylnitrilmaterialien, sauer modifizierten Polyamid- oder Polyestermaterialien oder Baumwolle.

21. Verwendung nach Anspruch 19 zum Färben oder Bedrucken von Papier und Karton.

22. Das nach einem der Ansprüche 19-21 gefärbte oder bedruckte Material.

FO 7.1/RI/co*

Europäisches Patentamt

# EUROPÄISCHER RECHERCHENBERICHT

0176474

Nummer der Anmeldung

EP 85 81 0376

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-1 257 255 (DU PONT)<br>* Zusammenfassung; Seite 1, rechte Spalte, Absatz 2 - Seite 2, Absatz 3; Seite 4, Verbindung 1 *<br>--- | 1-11, 16-20, 22 | C 09 B 56/16<br>D 06 P 1/08<br>D 21 H 3/80 |
| A | GB-A- 984 905 (GEIGY)<br>* Anspruch 1 * & US - A - 3 185 538 (Cat. D,A)<br>----- | 1 | |
| | | | **RECHERCHIERTE SACHGEBIETE (Int Cl.4)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 06-12-1985 | GINESTET M.E.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82